# EUROPEAN PATENT APPLICATION

(11) **EP 4 455 185 A1**
(43) Date of publication of application: **30.10.2024**
(21) Application number: 22911916.9
(22) Date of filing: 21.12.2022
(51) Int. Cl.: C08G 63/672, C08G 63/199, C08G 63/183, C08G 63/78, C08G 63/90

(54) **COPOLYMER POLYESTER RESIN AND PREPARATION METHOD THEREFOR**

(30) Priority: 22.12.2021 KR 20210185099
(71) Applicant: SK Chemicals Co., Ltd., Seongnam-si, Gyeonggi-do 13494 (KR)
(72) Inventor: OH, Hyun-Woo, Seongnam-si, Gyeonggi-do 13494 (KR); KANG, Byoung-Gook, Seongnam-si, Gyeonggi-do 13494 (KR); MOON, Jung-Me, Seongnam-si, Gyeonggi-do 13494 (KR); SIM, Jinsook, Seongnam-si, Gyeonggi-do 13494 (KR); LEE, Yoo Jin, Seongnam-si, Gyeonggi-do 13494 (KR); LEE, Jin-Kyung, Seongnam-si, Gyeonggi-do 13494 (KR)
(74) Representative: Dehns
(86) International application number: PCT/KR2022/020942
(87) International publication number: WO 2023/121283

(57) **Abstract**

The present invention relates to a copolymer polyester resin and a preparation method therefor. In particular, according to an embodiment of the present invention, the copolymer polyester resin comprises a repeating unit derived from a diol component and a repeating unit derived from a component of dicarboxylic acid or a derivative thereof, in which, by adjustment of the amounts of a first diol to a third diol or a fourth diol to a sixth diol, included in the diol component, impact strength and intrinsic viscosity are controlled to be within appropriate ranges without degrading transparency, and thus miscibility is excellent. Therefore, the copolymer polyester resin can exhibit excellent characteristics by being utilized in various fields requiring high impact strength and high heat resistance, such as packaging materials such as food containers, and interior materials for vehicles.

## Description

### Technical Field

The present invention relates to a copolymerized polyester resin and to a process for preparing the same.

### Background Art

Polyester resins are widely used as materials for fibers, films, sheets, packaging materials such as food containers, and automobile interior parts by virtue of their excellent mechanical properties and transparency. In particular, since materials such as packaging materials in direct contact with food or automobile interior parts exposed to high temperatures require high thermal resistance and mechanical properties, research to enhance the same is ongoing.

In addition, in the case where a polyester resin is replaced with another resin in the process of preparing the polyester resin or the process of preparing a product using the same as a raw material, if the miscibility between the resins is low, the raw materials are wasted, or the process time is additionally required, resulting in a problem of low economic efficiency.

In order to enhance thermal resistance, mechanical properties, miscibility, or the like of a polyester resin, it is blended with other resins, or various additives are used. However, there is a limit to enhancing thermal resistance, mechanical properties, and miscibility. Even if thermal resistance or miscibility can be enhanced, there is a problem in that such properties as transparency or viscosity are deteriorated. Accordingly, there is a need for research on polyester resins capable of enhancing thermal resistance and mechanical properties without deteriorating transparency and viscosity and being readily replaceable by virtue of excellent miscibility between resins.

As an example, Korean Laid-open Patent Publication No. 2019-0064304 discloses a polyester resin having enhanced thermal resistance by copolymerizing a dicarboxylic acid compound including isophthalic acid and a diol compound including a cyclohexyl-based bisphenol compound. When the cyclohexyl-based bisphenol compound is employed, however, crystallinity is lowered, which deteriorates the viscosity characteristics and mechanical properties such as impact strength of the polyester resin.

### [Prior Art Document]

### [Patent Document]

(Patent Document 1) Korean Laid-open Patent Publication No. 2019-0064304

### Disclosure of Invention

### Technical Problem

Accordingly, the present invention aims to provide a copolymerized polyester resin capable of enhancing thermal resistance and mechanical properties without deteriorating transparency and viscosity characteristics, along with enhanced miscibility for easy replaceability and a process for preparing the same.

### Solution to Problem

The copolymerized polyester resin according to an embodiment of the present invention comprises a repeat unit derived from a diol component and a repeat unit derived from a dicarboxylic acid or its derivative component, wherein the diol component comprises (1) 10% by mole to 26% by mole of a first diol comprising isosorbide (ISB) or a derivative thereof; (2) 65% by mole to 80% by mole of a second diol comprising cyclohexanedimethanol (CHDM) or a derivative thereof; and (3) 8% by mole to 25% by mole of a third diol different from the first diol and the second diol, and a specimen having a thickness of 6 mm prepared by blending two types of the copolymerized polyester resin having different compositions at a weight ratio of 1:1 has a haze of less than 5.0% when measured according to ASTM D1003-97.

The copolymerized polyester resin according to another embodiment of the present invention comprises a repeat unit derived from a diol component and a repeat unit derived from a dicarboxylic acid or its derivative component, wherein the diol component comprises (4) 15% by mole to 25% by mole of a fourth diol comprising 2,2,4,4-tetramethyl-1,3-cyclobutanediol (TMCBD) or a derivative thereof; (5) 70% by mole to 80% by mole of a fifth diol comprising cyclohexanedimethanol (CHDM) or a derivative thereof; and (6) 0% by mole to 10% by mole of a sixth diol different from the fourth diol and the fifth diol, and a specimen having a thickness of 6 mm prepared by blending two types of the copolymerized polyester resin having different compositions at a weight ratio of 1:1 has a haze of less than 5.0% when measured according to ASTM D1003-97.

The process for preparing a copolymerized polyester resin according to still another embodiment of the present invention comprises (a) preparing a composition comprising a diol component and a dicarboxylic acid or its derivative component; (b) subjecting the composition to an esterification reaction; and (c) subjecting the product of the esterification reaction to a polycondensation reaction, wherein the molar ratio (G/A) of the diol component to the dicarboxylic acid or derivative component thereof introduced in step (a) is 1.10 to 3.00.

### Advantageous Effects of Invention

The copolymerized polyester resin according to an embodiment of the present invention comprises a repeat unit derived from a diol component and a repeat unit derived from a dicarboxylic acid or its derivative component, wherein the contents of the first to third diols or the fourth to sixth diols are controlled, whereby it is possible to enhance thermal resistance and mechanical properties without deteriorating transparency and viscosity characteristics. In particular, it is possible to enhance miscibility between resins, resulting in excellent replaceability.

Specifically, the copolymerized polyester resin satisfies the above composition while a mixed resin in which two types of the copolymerized polyester resin having different compositions are blended has a haze of less than 5.0%, resulting in excellent miscibility. Accordingly, in the case where a copolymerized polyester resin is replaced in the process of preparing the copolymerized polyester resin or the process of preparing a product using the same as a raw material such as an injection molding process, it is economical since the waste of raw materials can be minimized, and process time or process steps can be curtailed.

Further, when the copolymerized polyester resin according to an embodiment of the present invention is applied to products that require high impact strength and high thermal resistance, such as packaging materials such as food containers and automobile interior parts, it would be excellent in stability and quality.

### Best Mode for Carrying out the Invention

Hereinafter, the present invention will be described in detail. The present invention is not limited to the disclosures given below, but it may be modified into various forms as long as the gist of the invention is not changed.

Throughout the present specification, when a part is referred to as "comprising" an element, it is understood that other elements may be comprised, rather than other elements are excluded, unless specifically stated otherwise.

All numbers and expressions related to the quantities of components, reaction conditions, and the like used herein are to be understood as being modified by the term "about," unless otherwise indicated.

In the present specification, in the case where an element is mentioned to be formed "on" or "under" another element, it means not only that one element is directly formed "on" or "under" another element, but also that one element is indirectly formed on or under another element with other element(s) interposed between them.

Throughout the present specification, the terms first, second, and the like are used to describe various components. But the components should not be limited by the terms. The terms are used only for the purpose of distinguishing one component from another.

### Copolymerized polyester resin

The copolymerized polyester resin according to an embodiment of the present invention comprises a repeat unit derived from a diol component and a repeat unit derived from a dicarboxylic acid or its derivative component, wherein the diol component comprises (1) 10% by mole to 26% by mole of a first diol comprising isosorbide (ISB) or a derivative thereof; (2) 65% by mole to 80% by mole of a second diol comprising cyclohexanedimethanol (CHDM) or a derivative thereof; and (3) 8% by mole to 25% by mole of a third diol different from the first diol and the second diol, and a specimen having a thickness of 6 mm prepared by blending two types of the copolymerized polyester resin having different compositions at a weight ratio of 1:1 has a haze of less than 5.0% when measured according to ASTM D1003-97.

The copolymerized polyester resin according to another embodiment of the present invention comprises a repeat unit derived from a diol component and a repeat unit derived from a dicarboxylic acid or its derivative component, wherein the diol component comprises (4) 15% by mole to 25% by mole of a fourth diol comprising 2,2,4,4-tetramethyl-1,3-cyclobutanediol (TMCBD) or a derivative thereof; (5) 70% by mole to 80% by mole of a fifth diol comprising cyclohexanedimethanol (CHDM) or a derivative thereof; and (6) 0% by mole to 10% by mole of a sixth diol different from the fourth diol and the fifth diol, and a specimen having a thickness of 6 mm prepared by blending two types of the copolymerized polyester resin having different compositions at a weight ratio of 1:1 has a haze of less than 5.0% when measured according to ASTM D1003-97.

Specifically, the copolymerized polyester resin is a resin in which a diol component and a dicarboxylic acid or its derivative component are copolymerized, and it comprises a repeat unit derived from a diol component and a repeat unit derived from a dicarboxylic acid or a derivative component thereof.

According to an embodiment of the present invention, the diol component comprises a first diol comprising isosorbide (ISB) or a derivative thereof in an amount of 10% by mole to 26% by mole based on the total number of moles of the diol component. More specifically, the copolymerized polyester resin comprises 10% by mole to 26% by mole of a residue derived from the first diol relative to the entire diol-derived residues of the copolymerized polyester resin.

For example, the copolymerized polyester resin may comprise the first diol in an amount of 10% by mole to 25% by mole, 10% by mole to 23% by mole, 10% by mole to 20% by mole, 11% by mole to 25% by mole, 11% by mole to 23% by mole, 11% by mole to 20% by mole, 12% by mole to 25% by mole, 16% by mole to 25% by mole, 18% by mole to 25% by mole, or 20% by mole to 25% by mole, based on the total number of moles of the diol component.

As the content of the first diol satisfies the above range, it is possible to enhance mechanical properties and miscibility between resins without deteriorating thermal resistance. Specifically, if the content of the first diol is less than 10% by mole, the glass transition temperature of the copolymerized polyester resin may be lowered, which deteriorates thermal resistance. If the content of the first diol exceeds 26% by mole, the miscibility of the copolymerized polyester resin may be significantly decreased, which deteriorates replaceability.

In addition, the diol component comprises a second diol comprising cyclohexanedimethanol (CHDM) or a derivative thereof in an amount of 65% by mole to 80% by mole based on the total number of moles of the diol component. Specifically, the copolymerized polyester resin comprises 65% by mole to 80% by mole of a residue derived from the second diol relative to the entire diol-derived residues of the copolymerized polyester resin.

For example, the copolymerized polyester resin may comprise the second diol in an amount of 65% by mole to 78% by mole, 65% by mole to 77% by mole, or 70% by mole to 77% by mole, based on the total number of moles of the diol component.

As the content of the second diol satisfies the above range, it is possible to enhance crystallinity, thereby enhancing viscosity characteristics and mechanical properties such as impact strength, without deteriorating thermal resistance. Specifically, if the content of the second diol is less than 65% by mole, the viscosity characteristics and mechanical properties such as impact strength may be deteriorated, which deteriorates the durability, productivity, and lifespan characteristics of a product prepared from the copolymerized polyester resin. If the content of the second diol exceeds 80% by mole, the crystal characteristics may increase due to the reactivity with the first diol of the copolymerized polyester resin, which significantly deteriorates transparency and, especially, miscibility.

The diol component comprises a third diol different from the first diol and the second diol.

The third diol may be at least one selected from the group consisting of ethylene glycol, diethylene glycol, triethylene glycol, 1,2-propanediol, 1,3-propanediol, 1,4-propanediol, 1,5-pentanediol, 1,6-hexanediol, 1,8-octanediol, 2-methyl-1,3-propanediol, 2,2,4-trimethyl-1,3-pentanediol, 2-ethyl-2-butyl-1,3-propanediol, neopentyl glycol, and derivatives thereof. Ethylene glycol may be preferable in that it can enhance thermal resistance and miscibility without deteriorating transparency and mechanical properties, but it is not limited thereto.

The copolymerized polyester resin comprises the third diol in an amount of 8% by mole to 25% by mole based on the total number of moles of the diol component. Specifically, the copolymerized polyester resin comprises 8% by mole to 25% by mole of a residue derived from the third diol relative to the entire diol-derived residues of the copolymerized polyester resin.

For example, the copolymerized polyester resin may comprise the third diol in an amount of 8% by mole to 24% by mole, 8% by mole to 22% by mole, 8% by mole to 19% by mole, or 10% by mole to 25% by mole, based on the total number of moles of the diol component.

According to another embodiment of the present invention, the diol component comprises a fourth diol comprising 2,2,4,4-tetramethyl-1,3-cyclobutanediol (TMCBD) or a derivative thereof in an amount of 15% by mole to 25% by mole based on the total number of moles of the diol component. More specifically, the copolymerized polyester resin comprises 15% by mole to 25% by mole of a residue derived from the fourth diol relative to the entire diol-derived residues of the copolymerized polyester resin.

For example, the copolymerized polyester resin may comprise the fourth diol in an amount of 16% by mole to 24% by mole, 16% by mole to 22% by mole, 18% by mole to 21% by mole, or 17% by mole to 23% by mole, based on the total number of moles of the diol component.

As the content of the fourth diol satisfies the above range, it is possible to enhance mechanical properties and miscibility between resins without deteriorating thermal resistance. Specifically, if the content of the fourth diol is less than 15% by mole, the glass transition temperature of the copolymerized polyester resin may be lowered, which deteriorates thermal resistance. If the content of the fourth diol exceeds 25% by mole, the miscibility of the copolymerized polyester resin may be significantly decreased, which deteriorates replaceability.

In addition, the diol component comprises a fifth diol comprising cyclohexanedimethanol (CHDM) or a derivative thereof in an amount of 70% by mole to 80% by mole based on the total number of moles of the diol component. Specifically, the copolymerized polyester resin comprises 70% by mole to 80% by mole of a residue derived from the fifth diol relative to the entire diol-derived residues of the copolymerized polyester resin.

For example, the copolymerized polyester resin may comprise the fifth diol in an amount of 70% by mole to 78% by mole, 70% by mole to 75% by mole, or 70% by mole to 72% by mole, based on the total number of moles of the diol component.

As the content of the fifth diol satisfies the above range, it is possible to enhance viscosity characteristics and mechanical properties such as impact strength without deteriorating thermal resistance. Specifically, if the content of the fifth diol is less than 70% by mole, the viscosity characteristics and mechanical properties such as impact strength may be deteriorated, which deteriorates the durability, productivity, and lifespan characteristics of a product prepared from the copolymerized polyester resin. If the content of the fifth diol exceeds 80% by mole, the crystal characteristics may increase due to the reactivity with the fourth diol of the copolymerized polyester resin, which significantly deteriorates transparency and, especially, miscibility.

The diol component comprises a sixth diol different from the fourth diol and the fifth diol.

The sixth diol may be at least one selected from the group consisting of ethylene glycol, diethylene glycol, triethylene glycol, 1,2-propanediol, 1,3-propanediol, 1,4-propanediol, 1,5-pentanediol, 1,6-hexanediol, 1,8-octanediol, 2-methyl-1,3-propanediol, 2,2,4-trimethyl-1,3-pentanediol, 2-ethyl-2-butyl-1,3-propanediol, neopentyl glycol, and derivatives thereof. Ethylene glycol may be preferable in that it can enhance thermal resistance and miscibility without deteriorating transparency and mechanical properties, but it is not limited thereto.

The copolymerized polyester resin comprises the sixth diol in an amount of 0% by mole to 10% by mole based on the total number of moles of the diol component. Specifically, the copolymerized polyester resin comprises 0% by mole to 10% by mole of a residue derived from the sixth diol relative to the entire diol-derived residues of the copolymerized polyester resin.

For example, the copolymerized polyester resin may comprise the sixth diol in an amount of 1% by mole to 10% by mole, 3% by mole to 10% by mole, 5% by mole to 10% by mole, or 8% by mole to 10% by mole, based on the total number of moles of the diol component.

According to an embodiment of the present invention, it is important to adjust the contents of the first to third diols or the fourth to sixth diols in the copolymerized polyester resin.

Specifically, in order to achieve the desired physical properties in the present invention, more specifically to enhance thermal resistance, mechanical properties, and miscibility without deteriorating transparency and viscosity characteristics, it is very important to adjust the contents of the first to third diols or the fourth to sixth diols in the copolymerized polyester resin. Therefore, according to an embodiment of the present invention, as the contents of the first to third diols or the fourth to sixth diols satisfy the above respective ranges, it is possible to enhance thermal resistance, mechanical properties, and miscibility, along with transparency and viscosity characteristics.

In particular, isosorbide has been conventionally used in that it can enhance thermal resistance by increasing the glass transition temperature. When isosorbide is used, the thermal resistance can be enhanced, whereas there is a problem of deterioration in quality, such as a decrease in transparency, color characteristics, or mechanical properties, or a decrease in miscibility, which deteriorates replaceability and productivity. In addition, isosorbide has low reactivity, which makes it difficult to form a high-viscosity polyester resin. Thus, in order to achieve the physical properties desired in the present invention, it is very important to control the compositional ratios between the diol components.

Specifically, the compositional ratio of the second diol to the first diol (second diol (% by mole) / first diol (% by mole)) may be 2.30 to 7.45, 2.35 to 7.20, 2.55 to 7.15, 2.60 to 7.00, 3.00 to 7.20, 3.55 to 7.15, 3.55 to 7.00, or 3.50 to 6.00. The compositional ratio of the third diol to the second diol (third diol (% by mole) / second diol (% by mole)) may be 2.50 to 15.00, 2.55 to 13.00, 2.60 to 11.50, 2.65 to 10.00, 2.65 to 9.50, 2.71 to 9.00, 3.50 to 9.20, or 6.25 to 9.00. The compositional ratio of the first diol to the third diol (first diol (% by mole) / third diol (% by mole)) may be 0.25 to 6.00, 0.25 to 4.50, 0.30 to 3.55, 0.35 to 3.00, 0.40 to 2.75, 0.46 to 2.5, 0.50 to 2.55, or 0.85 to 2.50.

The compositional ratio of the fifth diol to the fourth diol (fifth diol (% by mole) / fourth diol (% by mole)) may be 2.55 to 7.05, 2.65 to 6.45, 2.70 to 5.95, 2.75 to 5.25, 2.85 to 4.90, 2.95 to 4.55, 3.00 to 4.15, 3.15 to 4.05, 3.25 to 3.90, or 3.30 to 3.65. The compositional ratio of the fifth diol to the sixth diol (fifth diol (% by mole) / sixth diol (% by mole)) may be 4.50 to 10.00, 4.75 to 9.50, 4.95 to 9.00, 5.25 to 8.65, 5.55 to 8.20, 5.80 to 8.05, 6.15 to 7.90, 6.45 to 7.75, or 6.85 to 7.45. The compositional ratio of the fourth diol to the sixth diol (fourth diol (% by mole) / sixth diol (% by mole)) may be 0.50 to 4.50, 0.55 to 3.95, 0.70 to 3.50, 0.85 to 2.95, 1.05 to 2.50, 1.55 to 2.25, or 1.75 to 2.05.

As the compositional ratios of the first to third diols or the fourth to sixth diols satisfy the above respective ranges, it is possible to further enhance thermal resistance, mechanical properties, and miscibility without deteriorating transparency and viscosity characteristics.

In addition, the dicarboxylic acid or its derivative component refers to a main monomer that constitutes the copolymerized polyester resin together with the diol component. The dicarboxylic acid or its derivative component may preferably comprise an aromatic dicarboxylic acid or its derivative in view of the enhancement of thermal resistance, but it is not limited thereto.

In the present specification, the "dicarboxylic acid or its derivative" refers to at least one compound selected from the group consisting of dicarboxylic acids and derivatives of dicarboxylic acids.

Specifically, the "derivative of a dicarboxylic acid" may refer to alkyl esters of a dicarboxylic acid or anhydrides of a dicarboxylic acid. For example, the alkyl ester may comprise an alkyl ester having 1 to 4 carbon atoms such as monomethyl ester, monoethyl ester, dimethyl ester, diethyl ester, and dibutyl ester, but it is not limited thereto.

More specifically, the dicarboxylic acid or its derivative may be terephthalic acid or its derivative, and it may be a compound that can react with a diol to form a terephthaloyl moiety, such as terephthalic acid, monoalkyl terephthalate, dialkyl terephthalate such as dimethyl terephthalate, or terephthalic anhydride.

According to an embodiment of the present invention, the dicarboxylic acid or its derivative may be terephthalic acid or its derivative.

Specifically, the dicarboxylic acid or its derivative may be comprised of terephthalic acid or its derivative alone. More specifically, the dicarboxylic acid or its derivative may be terephthalic acid or dimethyl terephthalate.

When the dicarboxylic acid is terephthalic acid, it may be preferable in that it is possible to increase the residual rate of ISB and to enhance mechanical properties such as impact strength and intrinsic viscosity characteristics. In addition, when the dicarboxylic acid derivative is dimethyl terephthalate, the residual rate of ISB may be slightly lower than the case where terephthalic acid is used, while it may be preferable in that it can further enhance such mechanical properties as impact strength and intrinsic viscosity characteristics.

For example, the copolymerized polyester resin may comprise 100% by mole of a residue derived from terephthalic acid or a residue derived from dimethyl terephthalate relative to the entire acid-derived residues of the copolymerized polyester resin. According to another embodiment of the present invention, while the dicarboxylic acid or its derivative comprises terephthalic acid or its derivative, it may further comprise a dicarboxylic acid or its derivative different from terephthalic acid or its derivative.

Specifically, the dicarboxylic acid or its derivative may comprise terephthalic acid or its derivative, and it may further comprise at least one selected from the group consisting of aromatic dicarboxylic acids having 8 to 14 carbon atoms or derivatives thereof and aliphatic dicarboxylic acids having 4 to 12 carbon atoms or derivatives thereof.

The aromatic dicarboxylic acids having 8 to 14 carbon atoms or derivatives thereof may be, for example, at least one selected from the group consisting of isophthalic acid, dimethyl isophthalate, phthalic acid, dimethyl phthalate, phthalic anhydride, naphthalene dicarboxylic acids such as 2,6-naphthalene dicarboxylic acid, dialkyl naphthalene dicarboxylates such as dimethyl-2,6-naphthalene dicarboxylate, and diphenyl dicarboxylic acid, but they are not limited thereto.

The aliphatic dicarboxylic acids having 4 to 12 carbon atoms or derivatives thereof may comprise linear, branched, or cyclic aliphatic dicarboxylic acids or derivatives thereof. For example, they may be at least one selected from the group consisting of cyclohexane dicarboxylic acids such as 1,4-cyclohexane dicarboxylic acid and 1,3-cyclohexane dicarboxylic acid, cyclohexane dicarboxylates such as dimethyl-1,4-cyclohexane dicarboxylate and dimethyl-1,3-cyclohexane dicarboxylate, sebacic acid, succinic acid, isodecylsuccinic acid, maleic acid, maleic anhydride, fumaric acid, adipic acid, glutaric acid, and azelaic acid, but they are not limited thereto.

In addition, the dicarboxylic acid or its derivative may comprise terephthalic acid or its derivative in an amount of 90% by mole to 99% by mole and at least one selected from the group consisting of aromatic dicarboxylic acids having 8 to 14 carbon atoms or derivatives thereof, different therefrom, and aliphatic dicarboxylic acids having 4 to 12 carbon atoms or derivatives thereof in an amount of 1% by mole to 10% by mole.

For example, the copolymerized polyester resin may comprise a residue derived from terephthalic acid or a residue derived from dimethyl terephthalate in an amount of 90% by mole to 99% by mole, 92% by mole to 98% by mole, 93% by mole to 97% by mole, or 94% by mole to 96% by mole, and a residue derived from isophthalic acid in an amount of 1% by mole to 10% by mole, 2% by mole to 8% by mole, 3% by mole to 7% by mole, or 4% by mole to 6% by mole, relative to the entire acid-derived residues of the copolymerized polyester resin.

According to an embodiment of the present invention, a specimen having a thickness of 6 mm prepared by blending two types of the copolymerized polyester resin having different compositions at a weight ratio of 1:1 has a haze of less than 5.0% when measured according to ASTM D1003-97.

Specifically, the two types of the copolymerized polyester resin may be two types of a copolymerized polyester resin comprising a first diol to a third diol, two types of a copolymerized polyester resin comprising a fourth diol to a sixth diol, or one type of a copolymerized polyester resin comprising a first diol to a third diol and one type of a copolymerized polyester resin comprising a fourth diol to a sixth diol.

In general, various resins are used in a process of manufacturing products using copolymerized polyester resins, specifically an injection molding process. Thus, if the miscibility between the resins is low, the raw materials are wasted, or the process time is additionally required, resulting in a problem of low economic efficiency.

If the constitution of the diol component and the dicarboxylic acid component, in particular, the contents of the respective diol components of the copolymerized polyester resin according to an embodiment of the present invention satisfies the above ranges, it has excellent miscibility even if their respective contents are different from each other. Specifically, if the miscibility between resins is low, when two resins are blended with each other, the haze value increases since they are not homogeneously blended. However, in the copolymerized polyester resin according to an embodiment of the present invention, a specimen having a thickness of 6 mm prepared by blending two types of the copolymerized polyester resin having different compositions at a weight ratio of 1:1 has a haze of less than 5.0% when measured according to ASTM D1003-97, indicating excellent miscibility.

For example, the haze of a specimen having a thickness of 6 mm prepared by blending two types of the copolymerized polyester resin having different compositions at a weight ratio of 1:1 may be 4.9% or less, 4.5% or less, 4.2% or less, 4.1% or less, 3.9% or less, 3.8% or less, 3.5% or less, 3.1% or less, less than 3.0%, 2.8% or less, 2.7% or less, 2.5% or less, 2.1% or less, 1.8% or less, 1.5% or less, 0.9% or less, 0.6% or less, 0.4% or less, or 0.3% or less, when measured according to ASTM D1003-97.

In addition, the copolymerized polyester resin may have a glass transition temperature (Tg) of 98°C to 115°C. For example, the glass transition temperature (Tg) of the copolymerized polyester resin may be 99°C to 115°C, 100°C to 115°C, 100°C to 114°C, 101°C to 114°C, 103°C to 115°C, 99°C to 110°C, or 100°C to 110°C.

Specifically, the glass transition temperature was measured as the first endothermic temperature in the second scan obtained by raising the temperature of the copolymerized polyester resin to 280°C at 10°C/minute under nitrogen, lowering the temperature to 30°C at -300°C/minute, and then raising the temperature again to 280°C at 10°C/minute under nitrogen.

A specimen having a thickness of 6.4 mm prepared from the copolymerized polyester resin may have an impact strength of 700 J/m or more when measured according to ASTM D256. For example, a specimen having a thickness of 6.4 mm prepared from the copolymerized polyester resin may have an impact strength of 705 J/m or more, 710 J/m or more, 720 J/m or more, 725 J/m or more, 730 J/m or more, 735 J/m or more, 740 J/m or more, 755 J/m or more, or 760 J/m or more, when measured according to ASTM D256.

Conventionally, research to enhance the thermal resistance and impact strength of copolymerized polyester resins has been continued; however, there is a limit to enhancing thermal resistance and hydrolysis resistance. Even if thermal resistance or hydrolysis resistance can be enhanced, there is a problem in that such properties as transparency and mechanical properties are deteriorated. Thus, it has been difficult to enhance such mechanical properties as thermal resistance, hydrolysis resistance, transparency, and impact strength altogether.

In particular, isosorbide has been widely used in that it can enhance thermal resistance by increasing the glass transition temperature, whereas it deteriorates such mechanical properties as transparency, color characteristics, and impact strength.

The copolymerized polyester resin is very excellent in impact resistance since a specimen having a thickness of 6.4 mm prepared therefrom has an impact strength of 700 J/m or more when measured according to ASTM D256. The impact strength changes sensitively with respect to the thickness of a specimen, especially as the thickness of a specimen gets thicker. The impact strength measured according to ASTM D256 for a specimen having a thickness of 3.2 mm prepared from conventional resins was usually 310 J/m or less. In contrast, the copolymerized polyester resin is very excellent in impact strength since a specimen prepared therefrom and having a larger thickness than those of the conventional resins satisfies an impact strength of 700 J/m or more. The copolymerized polyester resin according to an embodiment of the present invention has excellent impact resistance as the composition and compositional ratio of the diol component is adjusted within a specific range, and such properties as intrinsic viscosity and glass transition temperature are controlled as well.

In addition, a specimen having a thickness of 3.2 mm prepared from the copolymerized polyester resin may have an impact strength of 800 J/m or more when measured according to ASTM D256. For example, a specimen having a thickness of 3.2 mm prepared from the copolymerized polyester resin may have an impact strength of 820 J/m or more, 850 J/m or more, 855 J/m or more, or 860 J/m or more, when measured according to ASTM D256.

The copolymerized polyester resin may have an intrinsic viscosity (IV) of 0.64 to 0.78 dl/g. For example, the copolymerized polyester resin may have an intrinsic viscosity (IV) of 0.65 dl/g to 0.78 dl/g, 0.64 dl/g to 0.76 dl/g, 0.64 dl/g to 0.75 dl/g, 0.68 dl/g to 0.78 dl/g, 0.70 dl/g to 0.78 dl/g, 0.70 dl/g to 0.75 dl/g, 0.72 dl/g to 0.78 dl/g, or 0.74 dl/g to 0.78 dl/g.

As the intrinsic viscosity satisfies the above range, it is possible to enhance mechanical properties such as impact strength. Specifically, even if the composition and contents of resins are the same, the mechanical properties, especially the impact strength characteristics, may vary depending on the intrinsic viscosity; thus, it is important to control the intrinsic viscosity along with the composition and contents of resins in order to enhance mechanical properties such as impact strength without deteriorating such properties as transparency and thermal resistance.

According to an embodiment of the present invention, the copolymerized polyester resin may further comprise at least one additive selected from the group consisting of a colorant, a crystallizing agent, an oxidation stabilizer, and a branching agent.

The colorant is an additive for enhancing the color characteristics of the copolymerized polyester resin. Commonly used colorants such as cobalt acetate and cobalt propionate may be used as the colorant as long as the effects of the present invention are not impaired.

Specifically, the colorant may be cobalt acetate, cobalt propionate, anthraquinonebased compounds, perinone-based compounds, azo-based compounds, and methinebased compounds. Commercially available toners such as Polysynthren Blue RLS of Clariant or Solvaperm Red BB of Clariant may be used.

In addition, the copolymerized polyester resin may comprise the colorant in an amount of 0.1 ppm to 30 ppm based on the total weight of the copolymerized polyester resin. For example, the colorant may be employed in an amount of 0.2 ppm to 30 ppm, 0.5 ppm to 25 ppm, 0.6 ppm to 23 ppm, or 0.8 ppm to 20 ppm, based on the total weight of the copolymerized polyester resin. As the content of the colorant satisfies the above range, the color characteristics of the copolymerized polyester resin may be sufficiently enhanced without deteriorating its mechanical properties.

The crystallizing agent may comprise at least one selected from the group consisting of a crystal nucleating agent, a UV absorber, a polyolefin resin, a polyamide resin, and a polyalkylene resin.

In addition, the copolymerized polyester resin may comprise the crystallizing agent in an amount of 0.1 ppm to 10 ppm based on the total weight of the copolymerized polyester resin. For example, the crystallizing agent may be employed in an amount of 0.2 ppm to 8 ppm, 0.5 ppm to 6 ppm, 1 ppm to 10 ppm, 2 ppm to 8 ppm, 3 ppm to 6 ppm, or 4 ppm to 6 ppm, based on the total weight of the copolymerized polyester resin.

The oxidation stabilizer may comprise at least one selected from the group consisting of hindered phenol-based oxidation stabilizers, phosphite-based oxidation stabilizers, and thioether-based oxidation stabilizers.

In addition, the copolymerized polyester resin may comprise the oxidation stabilizer in an amount of 50 ppm to 3,000 ppm based on the total weight of the copolymerized polyester resin. For example, the oxidation stabilizer may be employed in an amount of 50 ppm to 2,700 ppm, 60 ppm to 2,400 ppm, 80 ppm to 2,200 ppm, 100 ppm to 2,000 ppm, 300 ppm to 2,000 ppm, 500 ppm to 1,900 ppm, or 750 ppm to 1,800 ppm, based on the total weight of the copolymerized polyester resin. As the content of the oxidation stabilizer satisfies the above range, it is possible to further enhance miscibility.

As the content of the oxidation stabilizer satisfies the above range, it is possible to effectively prevent a decrease in intrinsic viscosity that may occur in a subsequent process and to prevent a decrease in physical properties such as impact strength as well. Specifically, if the content of the oxidation stabilizer is less than 50 ppm, color characteristics may be deteriorated in a subsequent process such as processing. If it exceeds 3,000 ppm, polymerization reactivity may be lowered, thereby deteriorating viscosity characteristics.

The branching agent may comprise at least one selected from the group consisting of trimellitic anhydride, trimethylol propane, and trimellitic acid.

In addition, the copolymerized polyester resin may comprise the branching agent in an amount of 100 ppm to 2,500 ppm based on the total weight of the copolymerized polyester resin. For example, the branching agent may be employed in an amount of 100 ppm to 2,000 ppm, 110 ppm to 1,800 ppm, 115 ppm to 1,500 ppm, 120 ppm to 1,200 ppm, or 130 ppm to 1,000 ppm, based on the total weight of the copolymerized polyester resin. As the content of the branching agent satisfies the above range, the intrinsic viscosity may be more effectively controlled within a specific range.

### Copolymerized polyester mixed resin

The copolymerized polyester mixed resin according to another embodiment of the present invention comprises a first copolymerized polyester resin and a second copolymerized polyester resin, each of which comprises a repeat unit derived from a diol component and a repeat unit derived from a dicarboxylic acid or its derivative component, wherein the diol component comprises (1) 10% by mole to 26% by mole of a first diol comprising isosorbide (ISB) or a derivative thereof; (2) 65% by mole to 80% by mole of a second diol comprising cyclohexanedimethanol (CHDM) or a derivative thereof; and (3) 8% by mole to 25% by mole of a third diol different from the first diol and the second diol, and a specimen having a thickness of 6 mm prepared by blending the first copolymerized polyester resin and the second copolymerized polyester resin at a weight ratio of 1:1 has a haze of less than 5.0% when measured according to ASTM D1003-97.

The copolymerized polyester mixed resin according to still another embodiment of the present invention comprises a third copolymerized polyester resin and a fourth copolymerized polyester resin, each of which comprises a repeat unit derived from a diol component and a repeat unit derived from a dicarboxylic acid or its derivative component, wherein the diol component comprises (4) 15% by mole to 25% by mole of a fourth diol comprising 2,2,4,4-tetramethyl-1,3-cyclobutanediol (TMCBD) or a derivative thereof; (5) 70% by mole to 80% by mole of a fifth diol comprising cyclohexanedimethanol (CHDM) or a derivative thereof; and (6) 0% by mole to 10% by mole of a sixth diol different from the fourth diol and the fifth diol, and a specimen having a thickness of 6 mm prepared by blending the third copolymerized polyester resin and the fourth copolymerized polyester resin at a weight ratio of 1:1 has a haze of less than 5.0% when measured according to ASTM D1003-97.

The copolymerized polyester mixed resin may comprise a first copolymerized polyester resin and a second copolymerized polyester resin or a third copolymerized polyester resin and a fourth copolymerized polyester resin. In addition, the copolymerized polyester mixed resin may comprise a first copolymerized polyester resin and a third copolymerized polyester resin. The first to fourth copolymerized polyester resins each have substantially the same composition and characteristics as those of the copolymerized polyester resin described above.

Specifically, the first copolymerized polyester resin may have a compositional ratio different from that of the second copolymerized polyester resin. More specifically, the content of each diol component of the first copolymerized polyester resin may be different from the content of each diol component of the second copolymerized polyester resin. The content of each dicarboxylic acid or its derivative component of the first copolymerized polyester resin may be different from the content of each dicarboxylic acid or its derivative component of the second copolymerized polyester resin.

In addition, the third copolymerized polyester resin may have a compositional ratio different from that of the fourth copolymerized polyester resin. More specifically, the content of each diol component of the third copolymerized polyester resin may be different from the content of each diol component of the fourth copolymerized polyester resin. The content of each dicarboxylic acid or its derivative component of the third copolymerized polyester resin may be different from the content of each dicarboxylic acid or its derivative component of the fourth copolymerized polyester resin.

The copolymerized polyester mixed resin according to still another embodiment of the present invention comprises a first copolymerized polyester resin comprising the first to third diols and a third copolymerized polyester resin comprising the fourth to sixth diols, wherein a specimen having a thickness of 6 mm prepared by blending the first copolymerized polyester resin and the third copolymerized polyester resin at a weight ratio of 1:1 has a haze of less than 5.0% when measured according to ASTM D1003-97.

Specifically, a specimen having a thickness of 6 mm prepared by blending the first copolymerized polyester resin and the second copolymerized polyester resin, the third copolymerized polyester resin and the fourth copolymerized polyester resin, or the first copolymerized polyester resin and the third copolymerized polyester resin at a weight ratio of 1:1 has a haze of less than 5.0% when measured according to ASTM D1003-97.

For example, the haze of a specimen having a thickness of 6 mm prepared by blending the first copolymerized polyester resin and the second copolymerized polyester resin, the third copolymerized polyester resin and the fourth copolymerized polyester resin, or the first copolymerized polyester resin and the third copolymerized polyester resin at a weight ratio of 1:1 may be 4.9% or less, 4.5% or less, 4.3% or less, 4.2% or less, 4.1% or less, 4.0% or less, 3.9% or less, 3.8% or less, 3.5% or less, 3.1% or less, less than 3.0%, 2.8% or less, 2.7% or less, 2.5% or less, 2.1% or less, 1.8% or less, 1.5% or less, 0.9% or less, 0.6% or less, 0.4% or less, or 0.3% or less, when measured according to ASTM D1003-97.

Since the copolymerized polyester mixed resin according to still another embodiment of the present invention comprises two types of the copolymerized polyester resin, it can be readily adjusted to have the desired physical properties, and a specimen having a thickness of 6 mm prepared by blending them at a weight ratio of 1:1 has a haze of less than 5.0% when measured according to ASTM D1003-97, indicating excellent miscibility.

In addition, the copolymerized polyester mixed resin may further comprise a copolymerized polyester resin comprising a repeat unit derived from a diol component and a repeat unit derived from a dicarboxylic acid or its derivative component, wherein the diol component comprises (1) 10% by mole to 26% by mole of a first diol comprising isosorbide (ISB) or a derivative thereof; (2) 65% by mole to 80% by mole of a second diol comprising cyclohexanedimethanol (CHDM) or a derivative thereof; and (3) 8% by mole to 25% by mole of a third diol different from the first diol and the second diol.

In addition, the copolymerized polyester mixed resin may further comprise a copolymerized polyester resin comprising a repeat unit derived from a diol component and a repeat unit derived from a dicarboxylic acid or its derivative component, wherein the diol component comprises (4) 15% by mole to 25% by mole of a fourth diol comprising 2,2,4,4-tetramethyl-1,3-cyclobutanediol (TMCBD) or a derivative thereof; (5) 70% by mole to 80% by mole of a fifth diol comprising cyclohexanedimethanol (CHDM) or a derivative thereof; and (6) 0% by mole to 10% by mole of a sixth diol different from the fourth diol and the fifth diol.

Specifically, the copolymerized polyester mixed resin according to another embodiment of the present invention may comprise three or more types of copolymerized polyester mixed resins.

### Process for preparing a copolymerized polyester resin

The process for preparing a copolymerized polyester resin according to still another embodiment of the present invention comprises (a) preparing a composition comprising a diol component and a dicarboxylic acid or its derivative component; (b) subjecting the composition to an esterification reaction; and (c) subjecting the product of the esterification reaction to a polycondensation reaction, wherein the molar ratio (G/A) of the diol component to the dicarboxylic acid or derivative component thereof introduced in step (a) is 1.10 to 3.00.

A copolymerized polyester resin prepared according to the process for preparing a copolymerized polyester resin has substantially the same composition and characteristics as those of the copolymerized polyester resin described above.

In addition, the composition and process conditions may be adjusted, so that the copolymerized polyester resin finally prepared according to the process for preparing a copolymerized polyester resin satisfies the properties such as transparency, thermal resistance, hydrolysis resistance, and mechanical properties described above.

First, a composition comprising a diol component and a dicarboxylic acid or its derivative component is prepared (step (a)).

Details on the diol component and dicarboxylic acid or its derivative component are as described above.

The molar ratio (G/A) of the diol component to the dicarboxylic acid or its derivative component introduced in step (a) is 1.10 to 3.00. For example, the molar ratio (G/A) of the diol component to the dicarboxylic acid or its derivative component introduced in step (a) may be 1.15 to 2.85, 1.15 to 2.65, 1.18 to 2.63, 1.10 to 2.50, 1.18 to 2.63, 1.18 to 2.50, 1.10 to 2.20, 1.15 to 2.00, 1.18 to 1.55, 1.20 to 1.45, 1.18 to 1.40, 1.20 to 1.40, 1.25 to 1.40, or 1.30 to 1.40.

As the molar ratio (G/A) of the diol component to the dicarboxylic acid or its derivative component satisfies the above range, productivity may be enhanced without deterioration of transparency, and such mechanical properties as thermal resistance and impact strength may be enhanced altogether.

In addition, the molar ratio (I/T) of the first diol to the dicarboxylic acid or its derivative component introduced in step (a) may be 0.17 to 0.80, 0.17 to 0.65, 0.18 to 0.60, 0.18 to 0.50, 0.18 to 0.45, 0.18 to 0.42, 0.18 to 0.40, 0.19 to 0.42, 0.19 to 0.40, 0.25 to 0.40, or 0.25 to 0.40.

The molar ratio (C/T) of the second diol to the dicarboxylic acid or its derivative component introduced in step (a) may be 0.65 to 0.85, 0.65 to 0.82, 0.66 to 0.80, 0.67 to 0.77, 0.67 to 0.75, 0.72 to 0.77, 0.67 to 0.85, or 0.67 to 0.80.

The molar ratio (E/T) of the third diol to the dicarboxylic acid or its derivative component introduced in step (a) may be 0.18 to 1.50, 0.19 to 1.35, 0.20 to 1.25, 0.21 to 1.23, 0.18 to 1.10, 0.20 to 0.95, 0.20 to 0.50, 0.21 to 0.35, 0.21 to 0.33, or 0.21 to 0.32.

As the molar ratios of the first to third diols to the dicarboxylic acid or its derivative component introduced in step (a) are adjusted within the above ranges, it is possible to enhance thermal resistance, mechanical properties, and miscibility, along with transparency and viscosity characteristics.

In addition, at least one additive selected from the group consisting of a colorant, a crystallizing agent, an oxidation stabilizer, and a branching agent may be further added to the composition. Details on the additive are as described above.

Thereafter, the composition is subjected to an esterification reaction (step (b)).

The esterification reaction may be carried out at a pressure higher than normal pressure by 0.1 kg/cm² to 3.0 kg/cm² and a temperature of 245°C to 275°C for 2 to 12 hours.

The pressure may be higher than normal pressure by 0.1 kg/cm² to 3.0 kg/cm², 0.2 kg/cm² to 2.5 kg/cm², 0.3 kg/cm² to 2.2 kg/cm², 0.5 kg/cm² to 2.0 kg/cm², or 1.0 kg/cm² to 2.0 kg/cm².

In addition, the esterification reaction may be carried out at a temperature of 248°C to 275°C, 250°C to 275°C, 250°C to 272°C, 255°C to 270°C, or 260°C to 268°C, for 2 hours to 11 hours, 2 hours to 10 hours, 2.5 hours to 9 hours, 2.5 hours to 6 hours, or 2.5 hours to 4 hours.

More specifically, the esterification reaction may be carried out in the step of (b-1) injecting nitrogen into the reactor containing the composition to set a pressure higher than normal pressure by 0.1 kg/cm² to 3.0 kg/cm²; (b-2) raising the temperature of the reactor from room temperature to 210°C to 230°C over 60 minutes to 120 minutes and then maintaining the state for 1 hour to 3 hours; and (b-3) raising the temperature to 245°C to 275°C over 1 hour to 3 hours and then subjecting the composition to an esterification reaction.

Step (b-2) may be a step of raising the temperature of the reactor from room temperature to 210°C to 230°C or 215°C to 225°C over 70 minutes to 110 minutes or 80 minutes to 100 minutes and then maintaining the state for 1 hour to 3 hours or 1.5 hours to 2.5 hours.

Upon completion of the esterification reaction, the pressure of the reactor in a pressurized state is lowered to normal pressure, and then the polycondensation reaction may be carried out.

Thereafter, the product of the esterification reaction is subjected to a polycondensation reaction.

The polycondensation reaction may be carried out at a pressure of 0.01 mmHg to 600 mmHg and a temperature of 260°C to 290°C for 1 hour to 10 hours. For example, the polycondensation reaction may be carried out at a pressure of 0.01 mmHg to 450 mmHg, 0.01 mmHg to 300 mmHg, 0.01 mmHg to 200 mmHg, 0.05 mmHg to 100 mmHg, 0.1 mmHg to 50 mmHg, 0.2 mmHg to 10 mmHg, 0.2 mmHg to 3 mmHg, 0.3 mmHg to 1.5 mmHg, or 0.5 mmHg to 1.2 mmHg, and a temperature of 263°C to 290°C, 265°C to 285°C, 268°C to 285°C, 270°C to 285°C, or 275°C to 285°C, for 1 hour to 8 hours or 2 hours to 6 hours.

Specifically, the polycondensation reaction may be carried out in the step of (c-1) reducing the pressure of the product of the esterification reaction to 4.0 mmHg to 6.0 mmHg over 20 to 40 minutes, and (c-2) raising the temperature to 260°C to 290°C over 0.5 hour to 2 hours and then carrying out a polycondensation reaction while maintaining a pressure of 0.01 mmHg to 400 mmHg.

Step (c-1) may be a step of reducing the pressure of the product of the esterification reaction to 4.0 mmHg to 6.0 mmHg or 4.5 mmHg to 5.5 mmHg over 20 to 40 minutes or 25 to 35 minutes.

In addition, in step (c-2), the temperature may be raised to 263°C to 290°C, 265°C to 285°C, 268°C to 285°C, 270°C to 285°C, or 275°C to 285°C, over 0.5 hour to 2 hours or 0.7 hour to 1.2 hours.

At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly.

The polycondensation reaction may be carried out until the intrinsic viscosity (IV) of the polycondensation reactants becomes 0.65 dl/g to 0.78 dl/g, 0.64 dl/g to 0.76 dl/g, 0.64 dl/g to 0.75 dl/g, 0.68 dl/g to 0.78 dl/g, 0.70 dl/g to 0.78 dl/g, 0.70 dl/g to 0.75 dl/g, 0.72 dl/g to 0.78 dl/g, or 0.74 dl/g to 0.78 dl/g.

In addition, a catalyst and/or a stabilizer may be further added in the esterification reaction and the polycondensation reaction.

For example, the catalyst for an esterification reaction may be methylates of sodium and magnesium; acetates, borates, fatty acid salts, and carbonates of Zn, Cd, Mn, Co, Ca, and Ba; metallic Mg; and oxides of Pb, Zn, Sb, and Ge.

In addition, the catalyst for polycondensation reaction may be, for example, titaniumbased catalysts such as tetraethyl titanate, acetyl tripropyl titanate, tetrapropyl titanate, tetrabutyl titanate, polybutyl titanate, 2-ethylhexyl titanate, octylene glycol titanate, lactate titanate, triethanolamine titanate, acetyl acetonate titanate, ethyl acetoacetic ester titanate, isostearyl titanate, titanium dioxide, titanium dioxide/silicon dioxide copolymers, titanium dioxide/zirconium dioxide copolymers; germanium-based catalysts such as germanium dioxide and copolymers using the same; or tin-based catalysts such as monobutyltin oxide, dibutyltinoxide, and monobutylhydroxytinoxide.

In addition, the stabilizer may be a phosphorus-based compound such as phosphoric acid, trimethyl phosphate, and triethyl phosphate may be used, but it is not limited thereto.

The stabilizer may be employed in an amount of 10 ppm to 500 ppm based on the total weight of the copolymerized polyester resin. For example, the stabilizer may be employed in an amount of 50 ppm to 400 ppm, 70 ppm to 350 ppm, or 100 ppm to 300 ppm, based on the total weight of the copolymerized polyester resin.

In addition, after step (b), a step of water washing may be further carried out by immersing the product of the polycondensation reaction in water at 60°C to 80°C for 5 minutes to 7 hours. For example, after step (b), it may be carried out by immersing the product of the polycondensation reaction in water at 60°C to 80°C or 65°C to 75°C for 10 minutes to 7 hours, 30 minutes to 7 hours, 1 hour to 6.5 hours, 2 hours to 6 hours, 3 hours to 5.5 hours, or 4 hours to 5.5 hours. As a step of water washing under the above conditions is further carried out, the miscibility of the copolymerized polyester resin may be further enhanced.

The residual rate (%) of isosorbide (ISB) in the copolymerized polyester resin prepared by the process for preparing a copolymerized polyester resin according to an embodiment of the present invention may be 40% or more. For example, the residual rate (%) of isosorbide (ISB) in the copolymerized polyester resin may be calculated according to the following Equation A and may be 40% or more, 42% or more, 45% or more, 50% or more, 55% or more, or 58% or more. Residual rate of ISB (%) = (% by mole of ISB-derived residue among 100% by mole of total residues of the diol component of the copolymerized polyester resin/molar ratio of ISB to dicarboxylic acid or its derivative component added during the preparation of the copolymerized polyester resin) × 100

The residual rate of isosorbide stands for the content of isosorbide contained in the final copolymerized polyester resin prepared by the polycondensation process relative to the content of isosorbide introduced. As the residual rate of isosorbide in the copolymerized polyester resin prepared by the process for preparing a copolymerized polyester resin according to an embodiment of the present invention is controlled within the above range, the thermal resistance and hydrolysis resistance can be further enhanced without deteriorating transparency and mechanical properties.

### Mode for the Invention

Hereinafter, the present invention will be described in more detail with reference to the following examples. However, these examples are set forth to illustrate the present invention, and the scope of the present invention is not limited thereto.

### [Example]

### Preparation of a copolymerized polyester resin

### Example 1

### (a) Preparation of a composition

A 10-liter reactor equipped with a column and a condenser for cooling with water was charged with 2,608.6 g (15.7 moles) of terephthalic acid (TPA), 435.9 g (3.0 moles) of isosorbide (ISB), 1,516.4 g (10.5 moles) of cyclohexanedimethanol (CHDM), and 311.7 g (5.0 moles) of ethylene glycol (EG). Here, G/A (total diol/total diacid; molar ratio of the diol component to the dicarboxylic acid or its derivative component) was 1.18.

Thereafter, 12.8 g of GeO₂ as a catalyst, 5.1 g of phosphoric acid as a stabilizer, 0.020 g of a blue toner (product name: Polysynthren Blue RLS, manufacturer: Clarient), 0.004 g of a red toner (product name: Solvaperm Red BB, manufacturer: Clarient), and 0.4 g of trimellitic anhydride as a branching agent were added thereto, followed by stirring to prepare a composition.

### (b) Esterification reaction

Subsequently, nitrogen was injected into the reactor containing the composition to make the pressure in the reactor higher than normal pressure by 1.0 kgf/cm² (absolute pressure: 1,495.6 mmHg). Then, the temperature of the reactor was raised from room temperature to 220°C over 90 minutes and maintained at 220°C for 2 hours, and the temperature was then raised again to 260°C over 2 hours. Thereafter, an esterification reaction was carried out at a temperature of 260°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (c) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 280°C over 1 hour, and a polycondensation reaction was carried out while the pressure of the reactor was maintained at 1.0 Torr (absolute pressure: 1.0 mmHg) or less. Here, the stirring speed was set high at the beginning of the polycondensation reaction. As the polycondensation reaction proceeded, when the stirring power was weakened due to the increase in the viscosity of the reactants or the temperature of the reactants rose above the set temperature, the stirring speed was appropriately adjusted accordingly. The polycondensation reaction was carried out until the intrinsic viscosity (IV) of the mixture (melt) in the reactor reached 0.75 dl/g. The mixture was then discharged to the outside of the reactor to form strands. Thereafter, they were solidified with a cooling liquid and then granulated to have an average weight of about 12 mg to 14 mg and immersed in water at 70°C for 5 hours for water washing to prepare a copolymerized polyester resin.

In the copolymerized polyester resin thus prepared, the terephthalic acid-derived residue was 100% by mole relative to the entire acid-derived residues, and the isosorbide-derived residue was 11% by mole, the cyclohexanedimethanol-derived residue was 65% by mole, and the ethylene glycol-derived residue was 24% by mole, relative to the entire diol-derived residues.

### Example 2

### (a) Preparation of a composition

A 10-liter reactor equipped with a column and a condenser for cooling with water was charged with 2,047.2 g (12.3 moles) of terephthalic acid (TPA), 450.1 g (3.1 moles) of isosorbide (ISB), 1,281.5 g (8.9 moles) of cyclohexanedimethanol (CHDM), and 174.6 g (2.8 moles) of ethylene glycol (EG). Here, G/A (total diol/total diacid; molar ratio of the diol component to the dicarboxylic acid or its derivative component) was 1.20.

Thereafter, 10.2 g of GeO₂ as a catalyst and 4.1 g of phosphoric acid as a stabilizer were added thereto, followed by stirring to prepare a composition.

### (b) Esterification reaction

Subsequently, nitrogen was injected into the reactor containing the composition to make the pressure in the reactor higher than normal pressure by 0.5 kgf/cm² (absolute pressure: 1,127.8 mmHg). Then, the temperature of the reactor was raised from room temperature to 220°C over 90 minutes and maintained at 220°C for 2 hours, and the temperature was then raised again to 265°C over 2 hours. Thereafter, an esterification reaction was carried out at a temperature of 265°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (c) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 275°C over 1 hour, and a polycondensation reaction was carried out while the pressure of the reactor was maintained at 0.7 Torr (absolute pressure: 0.7 mmHg) or less. Here, the stirring speed was set high at the beginning of the polycondensation reaction. As the polycondensation reaction proceeded, when the stirring power was weakened due to the increase in the viscosity of the reactants or the temperature of the reactants rose above the set temperature, the stirring speed was appropriately adjusted accordingly. The polycondensation reaction was carried out until the intrinsic viscosity (IV) of the mixture (melt) in the reactor reached 0.65 dl/g. The mixture was then discharged to the outside of the reactor to form strands, which were solidified with a cooling liquid and then granulated to have an average weight of about 12 mg to 14 mg to prepare a copolymerized polyester resin.

In the copolymerized polyester resin thus prepared, the terephthalic acid-derived residue was 100% by mole relative to the entire acid-derived residues, and the isosorbide-derived residue was 12% by mole, the cyclohexanedimethanol-derived residue was 70% by mole, and the ethylene glycol-derived residue was 18% by mole, relative to the entire diol-derived residues.

### Example 3

### (a) Preparation of a composition

A 10-liter reactor equipped with a column and a condenser for cooling with water was charged with 2,417.4 g (14.6 moles) of terephthalic acid (TPA), 382.7 g (2.6 moles) of isosorbide (ISB), 1,664.6 g (11.6 moles) of cyclohexanedimethanol (CHDM), and 294.5 g (4.8 moles) of ethylene glycol (EG). Here, G/A (total diol/total diacid; molar ratio of the diol component to the dicarboxylic acid or its derivative component) was 1.30.

Thereafter, 12.3 g of GeO₂ as a catalyst, 4.9 g of phosphoric acid as a stabilizer, 0.019 g of a blue toner (product name: Polysynthren Blue RLS, manufacturer: Clarient) and 0.004 g of a red toner (product name: Solvaperm Red BB, manufacturer: Clarient) as a colorant, and 3.85 g of a hindered phenolic oxidation stabilizer (product name: Irganox 1076, manufacturer: BASF) were added thereto, followed by stirring to prepare a composition.

### (b) Esterification reaction

An esterification reaction was carried out in the same manner as in step (b) of Example 1.

### (c) Polycondensation reaction

A copolymerized polyester resin was prepared in the same manner as in step (c) of Example 2, except that the temperature of the reactor was raised to 270°C over 1 hour, that the pressure in the reactor was kept at 0.5 Torr (absolute pressure: 0.5 mmHg) or lower, and that the polycondensation reaction was carried out until the intrinsic viscosity (IV) of the mixture (melt) reached 0.78 dl/g.

In the copolymerized polyester resin thus prepared, the terephthalic acid-derived residue was 100% by mole relative to the entire acid-derived residues, and the isosorbide-derived residue was 11% by mole, the cyclohexanedimethanol-derived residue was 77% by mole, and the ethylene glycol-derived residue was 12% by mole, relative to the entire diol-derived residues.

### Example 4

### (a) Preparation of a composition

A 10-liter reactor equipped with a column and a condenser for cooling with water was charged with 2,400.8 g (14.5 moles) of terephthalic acid (TPA), 675.7 g (4.6 moles) of isosorbide (ISB), 1,502.9 g (10.4 moles) of cyclohexanedimethanol (CHDM), and 186.8 g (3.0 moles) of ethylene glycol (EG). Here, G/A (total diol/total diacid; molar ratio of the diol component to the dicarboxylic acid or its derivative component) was 1.30.

Thereafter, 12.3 g of GeO₂ as a catalyst, 4.9 g of phosphoric acid as a stabilizer, and 0.019 g of a blue toner (product name: Polysynthren Blue RLS, manufacturer: Clarient) and 0.004 g of a red toner (product name: Solvaperm Red BB, manufacturer: Clarient) as a colorant were added thereto, followed by stirring to prepare a composition.

### (b) Esterification reaction

An esterification reaction was carried out in the same manner as in step (b) of Example 1.

### (c) Polycondensation reaction

A copolymerized polyester resin was prepared in the same manner as in step (c) of Example 2, except that the temperature of the reactor was raised to 270°C over 1 hour, that the pressure in the reactor was kept at 0.2 Torr (absolute pressure: 0.2 mmHg) or lower, and that the polycondensation reaction was carried out until the intrinsic viscosity (IV) of the mixture (melt) reached 0.70 dl/g.

In the copolymerized polyester resin thus prepared, the terephthalic acid-derived residue was 100% by mole relative to the entire acid-derived residues, and the isosorbide-derived residue was 20% by mole, the cyclohexanedimethanol-derived residue was 70% by mole, and the ethylene glycol-derived residue was 10% by mole, relative to the entire diol-derived residues.

### Example 5

### (a) Preparation of a composition

A 10-liter reactor equipped with a column and a condenser for cooling with water was charged with 2,618.1 g (15.8 moles) of terephthalic acid (TPA), 967.1 g (6.6 moles) of isosorbide (ISB), 1,521.9 g (10.6 moles) of cyclohexanedimethanol (CHDM), and 303.0 g (4.9 moles) of ethylene glycol (EG). Here, G/A (total diol/total diacid; molar ratio of the diol component to the dicarboxylic acid or its derivative component) was 1.40.

Thereafter, 13.4 g of GeO₂ as a catalyst, 5.4 g of phosphoric acid as a stabilizer, 0.02 g of a polyethylene resin as a crystallizing agent, and 6.30 g of a hindered phenolic oxidation stabilizer (product name: Irganox 1076, manufacturer: BASF) were added thereto, followed by stirring to prepare a composition.

### (b) Esterification reaction

Subsequently, nitrogen was injected into the reactor containing the composition to make the pressure in the reactor higher than normal pressure by 1.5 kgf/cm² (absolute pressure: 1,863.4 mmHg). Then, the temperature of the reactor was raised from room temperature to 220°C over 90 minutes and maintained at 220°C for 2 hours, and the temperature was then raised again to 270°C over 2 hours. Thereafter, an esterification reaction was carried out at a temperature of 270°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (c) Polycondensation reaction

A copolymerized polyester resin was prepared in the same manner as in step (c) of Example 2, except that the temperature of the reactor was raised to 275°C over 1 hour, that the pressure in the reactor was kept at 0.9 Torr (absolute pressure: 0.9 mmHg) or lower, and that the polycondensation reaction was carried out until the intrinsic viscosity (IV) of the mixture (melt) reached 0.64 dl/g.

In the copolymerized polyester resin thus prepared, the terephthalic acid-derived residue was 100% by mole relative to the entire acid-derived residues, and the isosorbide-derived residue was 25% by mole, the cyclohexanedimethanol-derived residue was 65% by mole, and the ethylene glycol-derived residue was 10% by mole, relative to the entire diol-derived residues.

### Example 6

### (a) Preparation of a composition

A 10-liter reactor equipped with a column and a condenser for cooling with water was charged with 2,541.1 g (15.3 moles) of terephthalic acid (TPA), 894.0 g (6.1 moles) of isosorbide (ISB), 1,636.2 g (11.4 moles) of cyclohexanedimethanol (CHDM), and 197.2 g (3.2 moles) of ethylene glycol (EG). Here, G/A (total diol/total diacid; molar ratio of the diol component to the dicarboxylic acid or its derivative component) was 1.35.

Thereafter, 13.1 g of GeO₂ as a catalyst, 5.3 g of phosphoric acid as a stabilizer, and 7.38 g of a hindered phenolic oxidation stabilizer (product name: Irganox 1076, manufacturer: BASF) were added thereto, followed by stirring to prepare a composition.

### (b) Esterification reaction

Subsequently, nitrogen was injected into the reactor containing the composition to make the pressure in the reactor higher than normal pressure by 1.0 kgf/cm² (absolute pressure: 1,495.6 mmHg). Then, the temperature of the reactor was raised from room temperature to 220°C over 90 minutes and maintained at 220°C for 2 hours, and the temperature was then raised again to 265°C over 2 hours. Thereafter, an esterification reaction was carried out at a temperature of 265°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (c) Polycondensation reaction

A copolymerized polyester resin was prepared in the same manner as in step (c) of Example 2, except that the temperature of the reactor was raised to 280°C over 1 hour, that the pressure in the reactor was kept at 0.3 Torr (absolute pressure: 0.3 mmHg) or lower, and that the polycondensation reaction was carried out until the intrinsic viscosity (IV) of the mixture (melt) reached 0.74 dl/g.

In the copolymerized polyester resin thus prepared, the terephthalic acid-derived residue was 100% by mole relative to the entire acid-derived residues, and the isosorbide-derived residue was 20% by mole, the cyclohexanedimethanol-derived residue was 72% by mole, and the ethylene glycol-derived residue was 8% by mole, relative to the entire diol-derived residues.

### Example 7

### (a) Preparation of a composition

A 10-liter reactor equipped with a column and a condenser for cooling with water was charged with 2,294.8 g (11.8 moles) of dimethyl terephthalate (DMT), 1,036.2 g (7.1 moles) of isosorbide (ISB), 1,141.4 g (7.9 moles) of cyclohexanedimethanol (CHDM), and 902.0 g (14.5 moles) of ethylene glycol (EG). Here, G/A (total diol/total diacid; molar ratio of the diol component to the dicarboxylic acid or its derivative component) was 2.50.

Thereafter, 10.1 g of GeO₂ as a catalyst and 4.0 g of phosphoric acid as a stabilizer were added thereto, followed by stirring to prepare a composition.

### (b) Esterification reaction

Subsequently, nitrogen was injected into the reactor containing the composition to make the pressure in the reactor higher than normal pressure by 0.1 kgf/cm² (absolute pressure: 833.6 mmHg). Then, the temperature of the reactor was raised from room temperature to 220°C over 90 minutes and maintained at 220°C for 2 hours, and the temperature was then raised again to 265°C over 2 hours. Thereafter, an esterification reaction was carried out at a temperature of 265°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (c) Polycondensation reaction

A copolymerized polyester resin was prepared in the same manner as in step (c) of Example 2, except that the temperature of the reactor was raised to 280°C over 1 hour, that the pressure in the reactor was kept at 0.2 Torr (absolute pressure: 0.2 mmHg) or lower, and that the polycondensation reaction was carried out until the intrinsic viscosity (IV) of the mixture (melt) reached 0.64 dl/g.

In the copolymerized polyester resin thus prepared, the dimethyl terephthalatederived residue was 100% by mole relative to the entire acid-derived residues, and the isosorbide-derived residue was 25% by mole, the cyclohexanedimethanol-derived residue was 65% by mole, and the ethylene glycol-derived residue was 10% by mole, relative to the entire diol-derived residues.

### Example 8

### (a) Preparation of a composition

A 10-liter reactor equipped with a column and a condenser for cooling with water was charged with 1,865.4 g (11.2 moles) of terephthalic acid (TPA), 98.2 g (0.6 mole) isophthalic acid (IPA), 725.3 g (5.0 moles) of isosorbide (ISB), 1,141.4 g (7.9 moles) of cyclohexanedimethanol (CHDM), and 153.9 g (2.5 moles) of ethylene glycol (EG). Here, G/A (total diol/total diacid; molar ratio of the diol component to the dicarboxylic acid or its derivative component) was 1.30.

Thereafter, 10.1 g of GeO₂ as a catalyst and 4.0 g of phosphoric acid as a stabilizer were added thereto, followed by stirring to prepare a composition.

### (b) Esterification reaction

Subsequently, nitrogen was injected into the reactor containing the composition to make the pressure in the reactor higher than normal pressure by 1.5 kgf/cm² (absolute pressure: 1,863.4 mmHg). Then, the temperature of the reactor was raised from room temperature to 220°C over 90 minutes and maintained at 220°C for 2 hours, and the temperature was then raised again to 270°C over 2 hours. Thereafter, an esterification reaction was carried out at a temperature of 270°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (c) Polycondensation reaction

A copolymerized polyester resin was prepared in the same manner as in step (c) of Example 2, except that the temperature of the reactor was raised to 275°C over 1 hour, that the pressure in the reactor was kept at 0.3 Torr (absolute pressure: 0.3 mmHg) or lower, and that the polycondensation reaction was carried out until the intrinsic viscosity (IV) of the mixture (melt) reached 0.64 dl/g.

In the copolymerized polyester resin thus prepared, the terephthalic acid-derived and isophthalic acid-derived residues were 100% by mole relative to the entire acid-derived residues, and the isosorbide-derived residue was 25% by mole, the cyclohexanedimethanol-derived residue was 65% by mole, and the ethylene glycol-derived residue was 10% by mole, relative to the entire diol-derived residues.

### Example 9

### (a) Preparation of a composition

A 10-liter reactor equipped with a column and a condenser for cooling with water was charged with 2,182.6 g (13.1 moles) of terephthalic acid (TPA), 537.5 g (3.7 moles) of 2,2,4,4-tetramethyl-1,3-cyclobutanediol (TMCBD), 1,366.3 g (9.5 moles) of cyclohexanedimethanol (CHDM), and 243.2 g (3.9 moles) of ethylene glycol (EG). Here, G/A (total diol/total diacid; molar ratio of the diol component to the dicarboxylic acid or its derivative component) was 1.30.

Thereafter, 1.5 g of dibutyl tin oxide as a catalyst and 4.5 g of phosphoric acid as a stabilizer were added thereto, followed by stirring to prepare a composition.

### (b) Esterification reaction

Subsequently, nitrogen was injected into the reactor containing the composition to make the pressure in the reactor higher than normal pressure by 1.0 kgf/cm² (absolute pressure: 1,495.6 mmHg). Then, the temperature of the reactor was raised from room temperature to 220°C over 90 minutes and maintained at 220°C for 2 hours, and the temperature was then raised again to 268°C over 2 hours. Thereafter, an esterification reaction was carried out at a temperature of 268°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (c) Polycondensation reaction

A copolymerized polyester resin was prepared in the same manner as in step (c) of Example 2, except that the temperature of the reactor was raised to 280°C over 1 hour, that the pressure in the reactor was kept at 0.2 Torr (absolute pressure: 0.2 mmHg) or lower, and that the polycondensation reaction was carried out until the intrinsic viscosity (IV) of the mixture (melt) reached 0.70 dl/g.

In the copolymerized polyester resin thus prepared, the terephthalic acid-derived residue was 100% by mole relative to the entire acid-derived residues, and the 2,2,4,4-tetramethyl-1,3-cyclobutanediol-derived residue was 20% by mole, the cyclohexanedimethanol-derived residue was 70% by mole, and the ethylene glycol-derived residue was 10% by mole, relative to the entire diol-derived residues.

### Comparative Example 1

### (a) Preparation of a composition

A 10-liter reactor equipped with a column and a condenser for cooling with water was charged with 2,821.8 g (17.0 moles) of terephthalic acid (TPA), 397.1 g (2.7 moles) of isosorbide (ISB), 1,514.1 g (10.5 moles) of cyclohexanedimethanol (CHDM), and 496.9 g (8.0 moles) of ethylene glycol (EG). Here, G/A (total diol/total diacid; molar ratio of the diol component to the dicarboxylic acid or its derivative component) was 1.25.

Thereafter, 13.4 g of GeO₂ as a catalyst, 5.4 g of phosphoric acid as a stabilizer, and 0.021 g of a blue toner (product name: Polysynthren Blue RLS, manufacturer: Clarient) and 0.004 g of a red toner (product name: Solvaperm Red BB, manufacturer: Clarient) as a colorant were added thereto, followed by stirring to prepare a composition.

### (b) Esterification reaction

Subsequently, nitrogen was injected into the reactor containing the composition to make the pressure in the reactor higher than normal pressure by 2.0 kgf/cm² (absolute pressure: 2,231.2 mmHg). Then, the temperature of the reactor was raised from room temperature to 220°C over 90 minutes and maintained at 220°C for 2 hours, and the temperature was then raised again to 255°C over 2 hours. Thereafter, an esterification reaction was carried out at a temperature of 255°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (c) Polycondensation reaction

Thereafter, the pressure of the reactor containing the product of the esterification reaction was reduced from normal pressure to 5.0 Torr (absolute pressure: 5 mmHg) over 30 minutes. At the same time, the temperature of the reactor was raised to 272°C over 1 hour, and a polycondensation reaction was carried out while the pressure of the reactor was maintained at 1.2 Torr (absolute pressure: 1.2 mmHg) or less. Here, the stirring speed was set high at the beginning of the polycondensation reaction. As the polycondensation reaction proceeded, when the stirring power was weakened due to the increase in the viscosity of the reactants or the temperature of the reactants rose above the set temperature, the stirring speed was appropriately adjusted accordingly. The polycondensation reaction was carried out until the intrinsic viscosity (IV) of the mixture (melt) in the reactor reached 0.70 dl/g. The mixture was then discharged to the outside of the reactor to form strands, which were solidified with a cooling liquid and then granulated to have an average weight of about 12 mg to 14 mg to prepare a copolymerized polyester resin.

In the copolymerized polyester resin thus prepared, the terephthalic acid-derived residue was 100% by mole relative to the entire acid-derived residues, and the isosorbide-derived residue was 7% by mole, the cyclohexanedimethanol-derived residue was 60% by mole, and the ethylene glycol-derived residue was 33% by mole, relative to the entire diol-derived residues.

### Comparative Example 2

### (a) Preparation of a composition

A 10-liter reactor equipped with a column and a condenser for cooling with water was charged with 2,511.6 g (15.1 moles) of terephthalic acid (TPA), 309.3 g (2.1 moles) of isosorbide (ISB), 1,617.2 g (11.2 moles) of cyclohexanedimethanol (CHDM), and 298.1 g (4.8 moles) of ethylene glycol (EG). Here, G/A (total diol/total diacid; molar ratio of the diol component to the dicarboxylic acid or its derivative component) was 1.20.

Thereafter, 12.5 g of GeO₂ as a catalyst, 5.0 g of phosphoric acid as a stabilizer, and 3.9 g of a hindered phenolic oxidation stabilizer (product name: Irganox 1076, manufacturer: BASF) were added thereto, followed by stirring to prepare a composition.

### (b) Esterification reaction

Subsequently, nitrogen was injected into the reactor containing the composition to make the pressure in the reactor higher than normal pressure by 2.0 kgf/cm² (absolute pressure: 2,231.2 mmHg). Then, the temperature of the reactor was raised from room temperature to 220°C over 90 minutes and maintained at 220°C for 2 hours, and the temperature was then raised again to 262°C over 2 hours. Thereafter, an esterification reaction was carried out at a temperature of 262°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (c) Polycondensation reaction

A copolymerized polyester resin was prepared in the same manner as in step (c) of Comparative Example 1, except that the temperature of the reactor was raised to 280°C over 1 hour, that the pressure in the reactor was kept at 1.0 Torr (absolute pressure: 1.0 mmHg) or lower, and that the polycondensation reaction was carried out until the intrinsic viscosity (IV) of the mixture (melt) reached 0.72 dl/g.

In the copolymerized polyester resin thus prepared, the terephthalic acid-derived residue was 100% by mole relative to the entire acid-derived residues, and the isosorbide-derived residue was 8% by mole, the cyclohexanedimethanol-derived residue was 72% by mole, and the ethylene glycol-derived residue was 20% by mole, relative to the entire diol-derived residues.

### Comparative Example 3

### (a) Preparation of a composition

A 10-liter reactor equipped with a column and a condenser for cooling with water was charged with 2,198.6 g (13.2 moles) of terephthalic acid (TPA), 251.4 g (1.7 moles) of isosorbide (ISB), 1,631.9 g (11.3 moles) of cyclohexanedimethanol (CHDM), and 134.9 g (2.2 moles) of ethylene glycol (EG). Here, G/A (total diol/total diacid; molar ratio of the diol component to the dicarboxylic acid or its derivative component) was 1.15.

Thereafter, 11.2 g of GeO₂ as a catalyst, 4.5 g of phosphoric acid as a stabilizer, and 1.05 g of trimellitic anhydride as a branching agent were added thereto, followed by stirring to prepare a composition.

### (b) Esterification reaction

An esterification reaction was carried out in the same manner as in step (b) of Example 1.

### (c) Polycondensation reaction

A copolymerized polyester resin was prepared in the same manner as in step (c) of Comparative Example 1, except that the temperature of the reactor was raised to 282°C over 1 hour, that the pressure in the reactor was kept at 0.5 Torr (absolute pressure: 0.5 mmHg) or lower, and that the polycondensation reaction was carried out until the intrinsic viscosity (IV) of the mixture (melt) reached 0.65 dl/g.

In the copolymerized polyester resin thus prepared, the terephthalic acid-derived residue was 100% by mole relative to the entire acid-derived residues, and the isosorbide-derived residue was 5% by mole, the cyclohexanedimethanol-derived residue was 83% by mole, and the ethylene glycol-derived residue was 12% by mole, relative to the entire diol-derived residues.

### Comparative Example 4

### (a) Preparation of a composition

A 10-liter reactor equipped with a column and a condenser for cooling with water was charged with 2,452.7 g (14.8 moles) of terephthalic acid (TPA), 690.3 g (4.7 moles) of isosorbide (ISB), 1,316.1 g (9.1 moles) of cyclohexanedimethanol (CHDM), and 331.1 g (5.3 moles) of ethylene glycol (EG). Here, G/A (total diol/total diacid; molar ratio of the diol component to the dicarboxylic acid or its derivative component) was 1.30.

Thereafter, 12.0 g of GeO₂ as a catalyst, 4.8 g of phosphoric acid as a stabilizer, 0.019 g of a blue toner (product name: Polysynthren Blue RLS, manufacturer: Clarient) and 0.004 g of a red toner (product name: Solvaperm Red BB, manufacturer: Clarient) as a colorant, and 5.63 g of a hindered phenolic oxidation stabilizer (product name: Irganox 1076, manufacturer: BASF) were added thereto, followed by stirring to prepare a composition.

### (b) Esterification reaction

Subsequently, nitrogen was injected into the reactor containing the composition to make the pressure in the reactor higher than normal pressure by 2.0 kgf/cm² (absolute pressure: 2,231.2 mmHg). Then, the temperature of the reactor was raised from room temperature to 220°C over 90 minutes and maintained at 220°C for 2 hours, and the temperature was then raised again to 258°C over 2 hours. Thereafter, an esterification reaction was carried out at a temperature of 258°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (c) Polycondensation reaction

A copolymerized polyester resin was prepared in the same manner as in step (c) of Comparative Example 1, except that the temperature of the reactor was raised to 270°C over 1 hour, that the pressure in the reactor was kept at 0.7 Torr (absolute pressure: 0.7 mmHg) or lower, and that the polycondensation reaction was carried out until the intrinsic viscosity (IV) of the mixture (melt) reached 0.62 dl/g.

In the copolymerized polyester resin thus prepared, the terephthalic acid-derived residue was 100% by mole relative to the entire acid-derived residues, and the isosorbide-derived residue was 15% by mole, the cyclohexanedimethanol-derived residue was 60% by mole, and the ethylene glycol-derived residue was 25% by mole, relative to the entire diol-derived residues.

### Comparative Example 5

### (a) Preparation of a composition

A 10-liter reactor equipped with a column and a condenser for cooling with water was charged with 2,222.5 g (13.4 moles) of terephthalic acid (TPA), 508.2 g (3.5 moles) of isosorbide (ISB), 1,689.4 g (11.7 moles) of cyclohexanedimethanol (CHDM), and 36.3 g (0.6 moles) of ethylene glycol (EG). Here, G/A (total diol/total diacid; molar ratio of the diol component to the dicarboxylic acid or its derivative component) was 1.18.

Thereafter, 11.7 g of GeO₂ as a catalyst, 4.7 g of phosphoric acid as a stabilizer, and 0.018 g of a blue toner (product name: Polysynthren Blue RLS, manufacturer: Clarient) and 0.004 g of a red toner (product name: Solvaperm Red BB, manufacturer: Clarient) as a colorant were added thereto, followed by stirring to prepare a composition.

### (b) Esterification reaction

An esterification reaction was carried out in the same manner as in step (b) of Example 6.

### (c) Polycondensation reaction

A copolymerized polyester resin was prepared in the same manner as in step (c) of Comparative Example 1, except that the temperature of the reactor was raised to 285 °C over 1 hour, that the pressure in the reactor was kept at 0.4 Torr (absolute pressure: 0.4 mmHg) or lower, and that the polycondensation reaction was carried out until the intrinsic viscosity (IV) of the mixture (melt) reached 0.61 dl/g.

In the copolymerized polyester resin thus prepared, the terephthalic acid-derived residue was 100% by mole relative to the entire acid-derived residues, and the isosorbide-derived residue was 13% by mole, the cyclohexanedimethanol-derived residue was 85% by mole, and the ethylene glycol-derived residue was 2% by mole, relative to the entire diol-derived residues.

### Comparative Example 6

### (a) Preparation of a composition

A 10-liter reactor equipped with a column and a condenser for cooling with water was charged with 2,628.0 g (15.8 moles) of terephthalic acid (TPA), 1,155.7 g (7.9 moles) of isosorbide (ISB), 1,245.6 g (8.7 moles) of cyclohexanedimethanol (CHDM), and 298.0 g (4.8 moles) of ethylene glycol (EG). Here, G/A (total diol/total diacid; molar ratio of the diol component to the dicarboxylic acid or its derivative component) was 1.35.

Thereafter, 13.1 g of GeO₂ as a catalyst, 5.3 g of phosphoric acid as a stabilizer, and 7.38 g of a hindered phenolic oxidation stabilizer (product name: Irganox 1076, manufacturer: BASF) were added thereto, followed by stirring to prepare a composition.

### (b) Esterification reaction

Subsequently, nitrogen was injected into the reactor containing the composition to make the pressure in the reactor higher than normal pressure by 2.0 kgf/cm² (absolute pressure: 2,231.2 mmHg). Then, the temperature of the reactor was raised from room temperature to 220°C over 90 minutes and maintained at 220°C for 2 hours, and the temperature was then raised again to 270°C over 2 hours. Thereafter, an esterification reaction was carried out at a temperature of 270°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (c) Polycondensation reaction

A copolymerized polyester resin was prepared in the same manner as in step (c) of Comparative Example 1, except that the temperature of the reactor was raised to 278°C over 1 hour, that the pressure in the reactor was kept at 0.2 Torr (absolute pressure: 0.2 mmHg) or lower, and that the polycondensation reaction was carried out until the intrinsic viscosity (IV) of the mixture (melt) reached 0.64 dl/g.

In the copolymerized polyester resin thus prepared, the terephthalic acid-derived residue was 100% by mole relative to the entire acid-derived residues, and the isosorbide-derived residue was 28% by mole, the cyclohexanedimethanol-derived residue was 53% by mole, and the ethylene glycol-derived residue was 19% by mole, relative to the entire diol-derived residues.

### Comparative Example 7

### (a) Preparation of a composition

A 10-liter reactor equipped with a column and a condenser for cooling with water was charged with 2,439.6 g (14.7 moles) of terephthalic acid (TPA), 1,287.4 g (8.8 moles) of isosorbide (ISB), 1,418.1 g (9.8 moles) of cyclohexanedimethanol (CHDM), and 45.5 g (0.7 mole) of ethylene glycol (EG). Here, G/A (total diol/total diacid; molar ratio of the diol component to the dicarboxylic acid or its derivative component) was 1.32.

Thereafter, 12.8 g of GeO₂ as a catalyst, 5.1 g of phosphoric acid as a stabilizer, and 0.63 g of a polyethylene resin as a crystallizing agent were added thereto, followed by stirring to prepare a composition.

### (b) Esterification reaction

Subsequently, nitrogen was injected into the reactor containing the composition to make the pressure in the reactor higher than normal pressure by 1.5 kgf/cm² (absolute pressure: 1,863.4 mmHg). Then, the temperature of the reactor was raised from room temperature to 220°C over 90 minutes and maintained at 220°C for 2 hours, and the temperature was then raised again to 268°C over 2 hours. Thereafter, an esterification reaction was carried out at a temperature of 263°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (c) Polycondensation reaction

A copolymerized polyester resin was prepared in the same manner as in step (c) of Comparative Example 1, except that the temperature of the reactor was raised to 275 °C over 1 hour, that the pressure in the reactor was kept at 0.3 Torr (absolute pressure: 0.3 mmHg) or lower, and that the polycondensation reaction was carried out until the intrinsic viscosity (IV) of the mixture (melt) reached 0.55 dl/g.

In the copolymerized polyester resin thus prepared, the terephthalic acid-derived residue was 100% by mole relative to the entire acid-derived residues, and the isosorbide-derived residue was 32% by mole, the cyclohexanedimethanol-derived residue was 65% by mole, and the ethylene glycol-derived residue was 3% by mole, relative to the entire diol-derived residues.

### Comparative Example 8

### (a) Preparation of a composition

A 10-liter reactor equipped with a column and a condenser for cooling with water was charged with 2,670.7 g (16.1 moles) of terephthalic acid (TPA), 587.2 g (4.0 moles) of isosorbide (ISB), 1,791.3 g (12.4 moles) of cyclohexanedimethanol (CHDM), and 326.4 g (5.3 moles) of ethylene glycol (EG). Here, G/A (total diol/total diacid; molar ratio of the diol component to the dicarboxylic acid or its derivative component) was 0.68.

Thereafter, 13.4 g of GeO₂ as a catalyst, 5.4 g of phosphoric acid as a stabilizer, and 0.63 g of trimellitic anhydride as a branching agent were added thereto, followed by stirring to prepare a composition.

### (b) Esterification reaction

Subsequently, nitrogen was injected into the reactor containing the composition to make the pressure in the reactor higher than normal pressure by 1.5 kgf/cm² (absolute pressure: 1,863.4 mmHg). Then, the temperature of the reactor was raised from room temperature to 220°C over 90 minutes and maintained at 220°C for 2 hours, and the temperature was then raised again to 263°C over 2 hours. Thereafter, an esterification reaction was carried out at a temperature of 263°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (c) Polycondensation reaction

A copolymerized polyester resin was prepared in the same manner as in step (c) of Comparative Example 1, except that the temperature of the reactor was raised to 270°C over 1 hour, that the pressure in the reactor was kept at 0.5 Torr (absolute pressure: 0.5 mmHg) or lower, and that the polycondensation reaction was carried out until the intrinsic viscosity (IV) of the mixture (melt) reached 0.81 dl/g.

In the copolymerized polyester resin thus prepared, the terephthalic acid-derived residue was 100% by mole relative to the entire acid-derived residues, and the isosorbide-derived residue was 9% by mole, the cyclohexanedimethanol-derived residue was 75% by mole, and the ethylene glycol-derived residue was 16% by mole, relative to the entire diol-derived residues.

### Comparative Example 9

### (a) Preparation of a composition

A 10-liter reactor equipped with a column and a condenser for cooling with water was charged with 2,444.6 g (13.2 moles) of terephthalic acid (TPA), 817.0 g (5.6 moles) of isosorbide (ISB), 1,268.0 g (8.8 moles) of cyclohexanedimethanol (CHDM), and 248.4 g (4.0 moles) of ethylene glycol (EG). Here, G/A (total diol/total diacid; molar ratio of the diol component to the dicarboxylic acid or its derivative component) was 0.42.

Thereafter, 12.2 g of GeO₂ as a catalyst and 4.9 g of phosphoric acid as a stabilizer were added thereto, followed by stirring to prepare a composition.

### (b) Esterification reaction

An esterification reaction was carried out in the same manner as in step (b) of Example 6.

### (c) Polycondensation reaction

A copolymerized polyester resin was prepared in the same manner as in step (c) of Comparative Example 1, except that the temperature of the reactor was raised to 268°C over 1 hour, that the pressure in the reactor was kept at 0.2 Torr (absolute pressure: 0.2 mmHg) or lower, and that the polycondensation reaction was carried out until the intrinsic viscosity (IV) of the mixture (melt) reached 0.62 dl/g.

In the copolymerized polyester resin thus prepared, the terephthalic acid-derived residue was 100% by mole relative to the entire acid-derived residues, and the isosorbide-derived residue was 22% by mole, the cyclohexanedimethanol-derived residue was 58% by mole, and the ethylene glycol-derived residue was 20% by mole, relative to the entire diol-derived residues.

### Comparative Example 10

### (a) Preparation of a composition

A 10-liter reactor equipped with a column and a condenser for cooling with water was charged with 2,253.8 g (13.6 moles) of terephthalic acid (TPA), 297.3 g (2.0 moles) of isosorbide (ISB), 1,814.0 g (12.6 moles) of cyclohexanedimethanol (CHDM), and 52.3 g (0.8 mole) of ethylene glycol (EG). Here, G/A (total diol/total diacid; molar ratio of the diol component to the dicarboxylic acid or its derivative component) was 0.38.

Thereafter, 11.8 g of GeO₂ as a catalyst and 4.7 g of phosphoric acid as a stabilizer were added thereto, followed by stirring to prepare a composition.

### (b) Esterification reaction

Subsequently, nitrogen was injected into the reactor containing the composition to make the pressure in the reactor higher than normal pressure by 1.0 kgf/cm² (absolute pressure: 1,495.6 mmHg). Then, the temperature of the reactor was raised from room temperature to 220°C over 90 minutes and maintained at 220°C for 2 hours, and the temperature was then raised again to 270°C over 2 hours. Thereafter, an esterification reaction was carried out at a temperature of 270°C for 3 hours while the composition in the reactor was visually observed until the composition became transparent. Upon completion of the esterification reaction, nitrogen in the pressurized reactor was purged to the outside to lower the pressure in the reactor to normal pressure, and the product of the esterification reaction in the reactor was then transferred to a 7-liter reactor capable of a reaction under vacuum.

### (c) Polycondensation reaction

A copolymerized polyester resin was prepared in the same manner as in step (c) of Comparative Example 1, except that the temperature of the reactor was raised to 285 °C over 1 hour, that the pressure in the reactor was kept at 0.4 Torr (absolute pressure: 0.4 mmHg) or lower, and that the polycondensation reaction was carried out until the intrinsic viscosity (IV) of the mixture (melt) reached 0.65 dl/g.

In the copolymerized polyester resin thus prepared, the terephthalic acid-derived residue was 100% by mole relative to the entire acid-derived residues, and the isosorbide-derived residue was 8% by mole, the cyclohexanedimethanol-derived residue was 90% by mole, and the ethylene glycol-derived residue was 2% by mole, relative to the entire diol-derived residues.

### [Test Example]

### Test Example 1: Composition of the copolymerized polyester resin

The copolymerized polyester resins of Examples 1 to 9 and Comparative Examples 1 to 10 were each dissolved in a CDCl₃ solvent at a concentration of 3 mg/ml. The composition (% by mole) of the copolymerized polyester resin was then measured through a 1H-NMR spectrum obtained using a nuclear magnetic resonance instrument (JEOL, 600 MHz FT-NMR) at 25°C.

In addition, the compositional ratio of cyclohexanedimethanol to isosorbide (C (% by mole)/I (% by mole)), the compositional ratio of cyclohexanedimethanol to 2,2,4,4-tetramethyl-1,3-cyclobutanediol (C (% by mole)/T (% by mole)), the compositional ratio of cyclohexanedimethanol to ethylene glycol (C (% by mole)/E (% by mole)), the compositional ratio of isosorbide to ethylene glycol (I (% by mole) / E (% by mole)), and the compositional ratio of 2,2,4,4-tetramethyl-1,3-cyclobutanediol to ethylene glycol (T (% by mole)/E (% by mole)) were calculated from the composition (% by mole) of each diol component identified above.

### Test Example 2: Residual rate of ISB

The copolymerized polyester resins of Examples 1 to 9 and Comparative Examples 1 to 10 were each calculated for the residual rate (%) of ISB according to the following Equation A. Residual rate of ISB (%) = (% by mole of ISB-derived residue among 100% by mole of total residues of the diol component of the copolymerized polyester resin/molar ratio of ISB to dicarboxylic acid or its derivative component added during the preparation of the copolymerized polyester resin) × 100

### Test Example 3: Glass transition temperature

The copolymerized polyester resins of Examples 1 to 9 and Comparative Examples 1 to 10 were each calculated for the glass transition temperature (TG) using a DSC1 device of Mettler Toledo.

Specifically, the glass transition temperature was measured as the first endothermic temperature in the second scan obtained by raising the temperature of the copolymerized polyester resin to 280°C at 10°C/minute under nitrogen, lowering the temperature to 30°C at -300°C/minute, and then raising the temperature again to 280°C at 10°C/minute under nitrogen.

### Test Example 4: Impact strength

The copolymerized polyester resins of Examples 1 to 9 and Comparative Examples 1 to 10 were each measured for the impact strength (J/m) according to ASTM D256.

Specifically, the copolymerized polyester resin was injection-molded at 250°C to prepare a specimen (width: 63.3 mm, length: 12.5 mm, thickness: 3.2 mm or width: 63.3 mm, length: 12.5 mm, thickness: 6.4 mm), and a notch of 2.3 mm was formed in the central part of the specimen using a notchmeter according to ISO 2818.

Thereafter, one end of the specimen was fixed, and the other end was impacted with a hammer in a notched direction to measure impact strength using an impact strength instrument (Product name: NO. 258 PC-S IMPACT TESTER, manufacturer: YASUDA SEIKI SEISAKUSHO, hammer capacity: 2.75 J for a specimen having a thickness of 3.2 mm or 5.5 J for a specimen having a thickness of 6.4 mm). Here, it was measured ten times, and the average value was calculated.

### Test Example 5: Intrinsic viscosity

The copolymerized polyester resins of Examples 1 to 9 and Comparative Examples 1 to 10 were each dissolved in ortho-chlorophenol (OCP) at 100°C at a concentration of 0.12%, and the intrinsic viscosity (IV, dl/g) was measured with an Ubbelohde viscometer in a thermostat at 35°C.

### Test Example 6: Haze

The copolymerized polyester resins of Examples 1 to 9 and Comparative Examples 1 to 10 were blended at a weight ratio of 1:1 as shown in Tables 3 to 5 below to prepare a specimen having a thickness of 6 mm. Thereafter, the haze (%) of the specimen was measured using a CM-3600A device of Minolta according to ASTM D1003-97.
⊚: a haze value of 0% to less than 3.0%
○: a haze value of 3.0% to less than 5.0%
×: a haze value of greater than 5.0%

**[Table 1]**

| | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| C/I or C/T | 5.91 | 5.83 | 7.00 | 3.50 | 2.60 | 3.60 | 2.60 | 2.60 | 3.50 |
| C/E | 2.71 | 3.89 | 6.42 | 7.00 | 6.50 | 9.00 | 6.50 | 6.50 | 7.00 |
| I/E or T/E | 0.46 | 0.67 | 0.92 | 2.00 | 2.50 | 2.50 | 2.50 | 2.50 | 2.00 |
| Residual rate of ISB (%) | 58 | 48 | 61 | 63 | 60 | 50 | 42 | 60 | 71 |
| Tg (°C) | 100 | 103 | 101 | 109 | 114 | 110 | 114 | 114 | 108 |
| Impact strength (3.2 mm, J/m) | 860 | 860 | 860 | 860 | 860 | 860 | 860 | 860 | 860 |
| Impact strength (6.4 mm, J/m) | 725 | 760 | 740 | 735 | 710 | 780 | 710 | 730 | 780 |
| IV (dl/g) | 0.75 | 0.65 | 0.78 | 0.70 | 0.64 | 0.74 | 0.64 | 0.64 | 0.70 |

**[Table 2]**

| | C. Ex. 1 | C. Ex. 2 | C. Ex. 3 | C. Ex. 4 | C. Ex. 5 | C. Ex. 6 | C. Ex. 7 | C. Ex. 8 | C. Ex. 9 | C. Ex. 10 |
|---|---|---|---|---|---|---|---|---|---|---|
| C/I or C/T | 8.57 | 9.00 | 16.60 | 4.00 | 6.54 | 1.89 | 2.03 | 8.30 | 2.64 | 11.25 |
| C/E | 1.82 | 3.60 | 6.92 | 2.40 | 42.50 | 2.79 | 21.67 | 4.69 | 2.90 | 45.00 |
| I/E or T/E | 0.21 | 0.40 | 0.42 | 0.60 | 6.50 | 1.47 | 10.67 | 0.56 | 1.10 | 4.00 |
| Residual rate of ISB (%) | 44 | 57 | 38 | 47 | 50 | 56 | 53 | 36 | 58 | 53 |
| Tg (°C) | 95 | 97 | 96 | 104 | 103 | 116 | 124 | 99 | 109 | 97 |
| Impact strength (3.2 mm, J/m) | 860 | 860 | 720 | 780 | 500 | 750 | 720 | 860 | 860 | 120 |
| Impact strength (6.4 mm, J/m) | 500 | 720 | 150 | 300 | 200 | 170 | 250 | 680 | 350 | 150 |
| IV (dl/g) | 0.70 | 0.72 | 0.65 | 0.62 | 0.61 | 0.64 | 0.55 | 0.81 | 0.62 | 0.65 |

**[Table 3]**

| Blending | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| Ex. 1 | - | ⊚ | ○ | ○ | ○ | ○ | ○ | ○ | ○ |
| Ex. 2 | - | - | ⊚ | ⊚ | ○ | ⊚ | ○ | ○ | ○ |
| Ex. 3 | - | - | - | ⊚ | ○ | ⊚ | ○ | ○ | ⊚ |
| Ex. 4 | - | - | - | - | ⊚ | ⊚ | ⊚ | ⊚ | ⊚ |
| Ex. 5 | - | - | - | - | - | ⊚ | ⊚ | ⊚ | ⊚ |
| Ex. 6 | - | - | - | - | - | - | ⊚ | ⊚ | ⊚ |
| Ex. 7 | - | - | - | - | - | - | - | ○ | ○ |
| Ex. 8 | - | - | - | - | - | - | - | - | ○ |
| Ex. 9 | - | - | - | - | - | - | - | - | - |

**[Table 4]**

| Blending | C. Ex. 1 | C. Ex. 2 | C. Ex. 3 | C. Ex. 4 | C. Ex. 5 | C. Ex. 6 | C. Ex. 7 | C. Ex. 8 | C. Ex. 9 | C. Ex. 10 |
|---|---|---|---|---|---|---|---|---|---|---|
| C. Ex. 1 | - | ○ | × | ⊚ | × | × | × | ○ | ○ | × |
| C. Ex. 2 | - | - | ⊚ | ○ | ○ | × | × | ⊚ | ○ | ○ |
| C. Ex. 3 | - | - | - | × | ⊚ | × | × | ⊚ | × | ⊚ |
| C. Ex. 4 | - | - | - | - | × | ○ | × | ○ | ⊚ | × |
| C. Ex. 5 | - | - | - | - | - | × | × | ○ | × | ⊚ |
| C. Ex. 6 | - | - | - | - | - | - | ○ | × | ⊚ | × |
| C. Ex. 7 | - | - | - | - | - | - | - | × | ○ | × |
| C. Ex. 8 | - | - | - | - | - | - | - | - | ○ | ○ |
| C. Ex. 9 | - | - | - | - | - | - | - | - | - | × |
| C. Ex. 10 | - | - | - | - | - | - | - | - | - | - |

**[Table 5]**

| Blending | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| C. Ex. 1 | ⊚ | ○ | × | × | × | × | × | × | × |
| C. Ex. 2 | ⊚ | ⊚ | ⊚ | ○ | ○ | ○ | ○ | ○ | ○ |
| C. Ex. 3 | ○ | ○ | ⊚ | ○ | × | ○ | × | × | ○ |
| C. Ex. 4 | ⊚ | ⊚ | × | ○ | ○ | ○ | ○ | ○ | ○ |
| C. Ex. 5 | × | ○ | ○ | ○ | × | ○ | × | × | ○ |
| C. Ex. 6 | ○ | ○ | × | ○ | ○ | ○ | ○ | ○ | ○ |
| C. Ex. 7 | × | × | × | ○ | ⊚ | ○ | ⊚ | ⊚ | ○ |
| C. Ex. 8 | ⊚ | ⊚ | ⊚ | ⊚ | ○ | ⊚ | ○ | ○ | ⊚ |
| C. Ex. 9 | ⊚ | ○ | ○ | ○ | ⊚ | ○ | ⊚ | ⊚ | ○ |
| C. Ex. 10 | × | × | ○ | × | × | ○ | × | × | × |

As shown in Tables 1 to 5 above, the copolymerized polyester resins of Examples 1 to 9 were excellent in all of the residual rate of ISB, glass transition temperature, impact strength, intrinsic viscosity, and haze characteristics as compared with the resins of Comparative Examples 1 to 10.

Specifically, in the copolymerized polyester resins of Examples 1 to 9, the residual rate of ISB was high, the thermal resistance and transparency were not deteriorated, and the impact strength and intrinsic viscosity were each controlled within the specific range, whereby the miscibility between resins was excellent. Accordingly, in the copolymerized polyester resins of Examples 1 to 9, the waste of raw materials can be minimized by virtue of excellent miscibility between the resins in the process, and when they are applied to various fields, especially, products that require high impact strength and high thermal resistance, such as packaging materials such as food containers and automobile interior parts, they would be excellent in stability and quality.

In contrast, the resins of Comparative Examples 1 to 10 had low glass transition temperatures, resulting in low thermal resistance, poor impact strength or intrinsic viscosity characteristics, and particularly poor miscibility between the resins.

Specifically, as shown in Table 3, the copolymerized polyester resins of Examples 1 to 9 had very excellent miscibility between the resins since the haze values measured for the specimens prepared by blending each other were all less than 5.0%.

In contrast, as shown in Table 4, the resins of Comparative Examples 1 to 10 had poor miscibility as most of the haze values measured for the specimens prepared by blending each other exceeded 5.0%. When the haze values were less than 5.0% in some cases, the thermal resistance or impact strength characteristics were not good.

In addition, as shown in Table 5, most of the haze values measured for the specimens prepared by blending with the copolymerized polyester resins of Examples 1 to 9 having excellent miscibility exceeded 5.0%, resulting in poor miscibility. When the haze values were less than 5.0% in some cases, the thermal resistance or impact strength characteristics were not good.

Accordingly, the resins of Comparative Examples 1 to 9 had a low economic efficiency in the manufacturing process. When they are applied to products that require high impact strength and high thermal resistance, such as packaging materials such as food containers and automobile interior parts, they would be very poor in stability and quality.

## Claims

1. A copolymerized polyester resin, which comprises a repeat unit derived from a diol component and a repeat unit derived from a dicarboxylic acid or its derivative component,
wherein the diol component comprises:
(1) 10% by mole to 26% by mole of a first diol comprising isosorbide (ISB) or a derivative thereof;
(2) 65% by mole to 80% by mole of a second diol comprising cyclohexanedimethanol (CHDM) or a derivative thereof; and
(3) 8% by mole to 25% by mole of a third diol different from the first diol and the second diol, and
a specimen having a thickness of 6 mm prepared by blending two types of the copolymerized polyester resin having different compositions at a weight ratio of 1:1 has a haze of less than 5.0% when measured according to ASTM D1003-97.

2. A copolymerized polyester resin, which comprises a repeat unit derived from a diol component and a repeat unit derived from a dicarboxylic acid or its derivative component,
wherein the diol component comprises:
(4) 15% by mole to 25% by mole of a fourth diol comprising 2,2,4,4-tetramethyl-1,3-cyclobutanediol (TMCBD) or a derivative thereof;
(5) 70% by mole to 80% by mole of a fifth diol comprising cyclohexanedimethanol (CHDM) or a derivative thereof; and
(6) 0% by mole to 10% by mole of a sixth diol different from the fourth diol and the fifth diol, and
a specimen having a thickness of 6 mm prepared by blending two types of the copolymerized polyester resin having different compositions at a weight ratio of 1:1 has a haze of less than 5.0% when measured according to ASTM D1003-97.

3. The copolymerized polyester resin of claim 1 or 2, wherein the two types of the copolymerized polyester resin are one type of the copolymerized polyester resin according to claim 1 and one type of the copolymerized polyester resin according to claim 2.

4. The copolymerized polyester resin of claim 1 or 2, which has a glass transition temperature (Tg) of 98°C to 115°C.

5. The copolymerized polyester resin of claim 1 or 2, wherein a specimen having a thickness of 6.4 mm prepared from the copolymerized polyester resin has an impact strength of 700 J/m or more when measured according to ASTM D256, and
a specimen having a thickness of 3.2 mm prepared from the copolymerized polyester resin has an impact strength of 800 J/m or more when measured according to ASTM D256.

6. The copolymerized polyester resin of claim 1 or 2, which has an intrinsic viscosity (IV) of 0.64 to 0.78 dl/g.

7. The copolymerized polyester resin of claim 1 or 2, wherein the third diol or the sixth diol comprises at least one selected from the group consisting of ethylene glycol, diethylene glycol, triethylene glycol, 1,2-propanediol, 1,3-propanediol, 1,4-propanediol, 1,5-pentanediol, 1,6-hexanediol, 1,8-octanediol, 2-methyl-1,3-propanediol, 2,2,4-trimethyl-1,3-pentanediol, 2-ethyl-2-butyl-1,3-propanediol, neopentyl glycol, and derivatives thereof.

8. The copolymerized polyester resin of claim 1 or 2, wherein the copolymerized polyester resin further comprises at least one additive selected from the group consisting of a colorant, a crystallizing agent, an oxidation stabilizer, and a branching agent.

9. The copolymerized polyester resin of claim 8, wherein the crystallizing agent is at least one selected from the group consisting of a crystal nucleating agent, a UV absorber, a polyolefin resin, a polyamide resin, and a polyalkylene resin, and
the crystallizing agent is employed in an amount of 0.1 ppm to 10 ppm based on the total weight of the copolymerized polyester resin.

10. The copolymerized polyester resin of claim 8, wherein the oxidation stabilizer comprises at least one selected from the group consisting of hindered phenol-based oxidation stabilizers, phosphite-based oxidation stabilizers, and thioether-based oxidation stabilizers, and
the oxidation stabilizer is employed in an amount of 50 ppm to 3,000 ppm based on the total weight of the copolymerized polyester resin.

11. The copolymerized polyester resin of claim 8, wherein the branching agent comprises at least one selected from the group consisting of trimellitic anhydride, trimethylol propane, and trimellitic acid, and
the branching agent is employed in an amount of 100 ppm to 2,500 ppm based on the total weight of the copolymerized polyester resin.

12. A process for preparing the copolymerized polyester resin of claim 1 or 2, which comprises:
(a) preparing a composition comprising a diol component and a dicarboxylic acid or its derivative component;
(b) subjecting the composition to an esterification reaction; and
(c) subjecting the product of the esterification reaction to a polycondensation reaction,
wherein the molar ratio (G/A) of the diol component to the dicarboxylic acid or derivative component thereof introduced in step (a) is 1.10 to 3.00.

13. The process for preparing the copolymerized polyester resin according to claim 12, wherein, after step (b), a step of water washing is further carried out by immersing the product of the polycondensation reaction in water at 60°C to 80°C for 5 minutes to 7 hours.
